# EUROPÄISCHE PATENTSCHRIFT

(11) **EP 1 525 113 B1**
(45) Veröffentlichungstag und Bekanntmachung des Hinweises auf die Patenterteilung: **11.03.2009**
(21) Anmeldenummer: 03784002.2
(22) Anmeldetag: 02.07.2003
(51) Int. Cl.: B60L 11/18, H01M 8/00

(54) **VERFAHREN UND ANORDNUNG ZUR STEUERUNG DER ENERGIEVERSORGUNG EINER WENIGSTENS EINEN ELEKTRISCHEN ANTRIEBSMOTOR AUFWEISENDEN, MOBILEN VORRICHTUNG MIT EINEM HYBRIDEN ENERGIESYSTEM, DAS EIN BRENNSTOFFZELLENSYSTEM ENTHÄLT**
METHOD AND ARRANGEMENT FOR CONTROLLING THE ENERGY SUPPLY OF A MOBILE DEVICE COMPRISING AT LEAST ONE ELECTRIC DRIVING MOTOR AND A HYBRID ENERGY SYSTEM CONTAINING A FUEL CELL SYSTEM AND A DYNAMIC ENERGY SYSTEM
PROCEDE ET SYSTEME POUR COMMANDER L'ALIMENTATION EN ENERGIE D'UN DISPOSITIF MOBILE PRESENTANT AU MOINS UN MOTEUR D'ENTRAINEMENT ELECTRIQUE ET UN SYSTEME D'ENERGIE HYBRIDE CONTENANT UN SYSTEME DE PILE A COMBUSTIBLE ET UN SYSTEME D'ENERGIE DYNAMIQUE

(30) Priorität: 25.07.2002 DE 10233821
(43) Veröffentlichungstag der Anmeldung: 27.04.2005
(73) Patentinhaber: Daimler AG, 70327 Stuttgart (DE)
(72) Erfinder: BUCK, Michael, 75365 Calw (DE); SCHÜTZ, Jörg, 71640 Ludwigsburg (DE)
(86) Internationale Anmeldenummer: PCT/EP2003/007030
(87) Internationale Veröffentlichungsnummer: WO 2004/014687

(56) Entgegenhaltungen:
- EP-A- 1 160 120
- WO-A-01/34424
- WO-A-02/29916
- WO-A-02/36385
- US-A- 4 839 246
- US-A- 5 334 463
- US-A1- 2002 095 247

## Beschreibung

Die Erfindung betrifft ein Verfahren bzw. eine Anordnung zur Steuerung der Energieversorgung einer wenigstens einen elektrischen Antriebsmotor aufweisenden, mobilen Vorrichtung mit einem hybriden Energieversorgungssystem gemäß dem Oberbegriff des Anspruchs 1 bzw. des Anspruchs 15.

Es ist ein Energieversorgungssystem in einem elektrischen Fahrzeug bekannt, das eine Brennstoffzelle und eine zu dieser parallel schaltbaren Speicherbatterie aufweist. Die elektrischen Ausgänge der Brennstoffzelle sind mit einem Motor zum Antrieb des Fahrzeugs und einem Gleichstrom-Gleichstrom-Wandler verbunden, an den Hilfsmaschinen im Fahrzeug angeschlossen sind. Das Energieversorgungssystem enthält eine Restladungsüberwachungseinrichtung zur Messung der Restladung der Speicherbatterie. Die Restladungsüberwachungseinrichtung erfaßt die Restladung der Speicherbatterie zum Zeitpunkt des Stoppvorgangs des Energieversorgungssystems. Wenn die Restladung unter einem vorgebbaren Grenzwert ist, lädt die Brennstoffzelle die Speicherbatterie bis zum Grenzwert auf. Dann erst wird das Energieversorgungssystem gestoppt (DE 197 31 250 A1).

Bekannt ist ein Hybrid-Antriebskonzept für Brennstoffzellen- . Fahrzeuge, die als Energiequelle eine Brennstoffzelle aufweisen, die einen Elektro-Fahrmotor speist. Das jeweilige Fahrzeug enthält einen Energiespeicher und elektrische Nebenverbraucher. Es sind im Fahrzeug zwei separate, mit Schaltvorrichtungen versehene Stromkreise zur wahlweisen Verbindung des Elektrofahrmotors und der Nebenverbraucher mit der Brennstoffzelle oder dem Energiespeicher und eine schaltbare Verbindung zwischen der Brennstoffzelle und dem Energiespeicher vorhanden (DE 198 10 467 C1).

Bekannt ist auch ein Brennstoffzellensystem mit einem Brennstofftank, einem Reformer, einer Brennstoffzelle, einem an die elektrischen Ausgänge der Brennstoffzelle angeschlossenen Gleichstrom-Gleichstrom-Wandler und einer mit dem Gleichstrom-Gleichstrom-Wandler verbundenen Last, zu der eine Speicherbatterie parallel geschaltet ist. Das Brennstoffzellensystem enthält eine Steuereinheit, mit der die Restladung der Speicherbatterie erfaßt wird. Die Steuereinheit sorgt dafür, daß die Speicherbatterie in der kürzest möglichen Zeit auf einen vorgebbaren Ladezustand aufgeladen wird (EP 0 334 474 B1).

Des Weiteren ist ein Energieversorgungssystem mit einer Brennstoffzelle, einem an die elektrischen Ausgänge der Brennstoffzelle angeschlossenen Gleichstrom-Gleichstrom-Wandler und einer an die Ausgänge des Gleichstrom-Gleichstrom-Wandlers angeschlossenen Last bekannt. Zu der Last ist eine Speicherbatterie parallel geschaltet. Eine Steuereinheit regelt den über den Gleichstrom-Gleichstrom-Wandler fließenden Strom derart, daß die Ausgangsspannung der Brennstoffzelle innerhalb eines vorgegebenen Bereichs verbleibt (US 5 714 874).

US 4 839 246 offenbart ein Verfahren zur Steuerung der Energieversorgung eines Kraftfahrzeuges mit einer Brennstoffzelle und einem Reformer, der zur Versorgung der Brennstoffzelle Wasserstoff erzeugt. Hierbei wird ein Signal zur Erhöhung der Leistung der Brennstoffzelle durch ein Integratorglied verzögert, umdem Reformer die notwendige Zeit zu geben, die Brennstoffzelle mit der für die gewünschte Leistung erforderlichen Menge an Wasserstoff zu versorgen. Diese für den Reformer notwendige Zeit liegt zwischen 0,5 und 2 Minuten und ist für den Betrieb der Brennstoffzelle mit der erforderlichen Menge Wasserstoff zwingend vorgegeben.

Aus der gattungsgemäßen WO 02 29916 ist ein Verfahren zur Steuerung der Energieversorgung eines Fahrzeuges bekannt, wobei das Energiesystem ein Brennstoffzellensystem eine Batterie und einen Gleichstrom-Gleichstrom-Wandler aufweist. Bei einer geänderten Leistungsanforderung wird anhand der bereits abgegebenen Leistung des Antriebsmotors und der bereits erzeugten Leistung des Brennstoffzellensystems sowie der Geschwindigkeit des Fahrzeuges die Differenz zwischen der vom Brennstoffzellensystem gemäß der Übergangsfunktion verzögert erzeugbaren Teilleistung und der Sollleistung von der Batterie des Energiesystems durch Beaufschlagung des Gleichstrom-Gleichstrom-Wandlers mit entsprechenden Sollwerten erzeugt. Hierbei werden

Der Erfindung liegt das Problem zugrunde, für die Energieversorgung einer wenigstens einen elektrischen Antriebsmotor aufweisenden, mobilen Vorrichtung mit einem hybriden Energiesystem aus einem Brennstoffzellensystem und einem dynamischen Energiesystem ein Verfahren und eine Anordnung anzugeben, mit denen unter Anpassung an die Parameter und/oder Betriebszustände das hybride Energiesystem bezüglich der jeweils geforderten Dynamik optimal gesteuert werden kann.

Die Aufgabe wird bei einem Verfahren gemäß dem Oberbegriff des Anspruchs 1 erfindungsgemäß dadurch gelöst, dass zudem ein Signal, das von einem Betriebsartenwahlschalter mit mehreren wählbaren Einstellungen abgegeben wird, die jeweils unterschiedlichen Dynamik-Verhaltensweisen der Vorrichtung zugeordnet sind, und Messwerte eines Stromsensors für den Ausgangsstrom und eines Spannungssensors für die Ausgangsspannung der Brennstoffzelle zur Erzeugung der Differenz zwischen der Teilleistung des Brennstoffzellensystems und der Sollleistung der Speicherbatterie unter Berücksichtigung der ausgewählten Dynamik-Verhaltensweise verarbeitet werden.

Aufgrund der Kenntnis des Energiebedarfs der mobilen Vorrichtung, die jeweils von dem Drehmomentsollwert, dem Einstellorgan und den Meßwerten der Sensoren abhängt, und der aus den Signalen, Stellungsgebern und Meßwerten berechnet wird, kann die Energieanforderung an das Brennstoffzellensystems in geeigneter Weise, d. h. mit günstigem Wirkungsgrad und/oder günstigem Zeitverhalten angepaßt werden, während die Speicherbatterie den Energiebeitrag für eine schnelle Dynamik der mobilen Vorrichtung liefert.

Bei einer sprungförmigen Zu- oder Abnahme der Solleistung wird die für die die Zu- oder Abnahme der zusätzlichen Leistung erforderliche Zu- oder Annahme des aus oder in die Speicherbatterie über den Gleichstrom-Gleichstrom-Wandler fließenden Stroms insbesondere auf einen maximal vorgebbaren Entlade- oder einen maximal vorgebbaren Aufladestrom begrenzt. Der maximale Entlade- bzw. Aufladestrom ergibt sich z. B. aus dem Typ der verwendeten Speicherbatterie.

Bei einer bevorzugten Ausführungsform werden von einer Fahrzeugsteuereinheit der mobilen Vorrichtung aus der Solleistung bestimmte Stromanforderungswerte für den Antriebsmotor Verbraucherstromwerten der weiteren Verbraucher in der Vorrichtung überlagert und mit einem von einem Batteriemanagementsystem bedarfsweise erzeugten Ladestromwert unter Begrenzung auf einen vorgebbaren Brennstoffzellenstrommaximalwert einer Energiesteuereinheit zugeführt, der weiterhin Vorrichtungsgeschwindigkeitswerte, Drehmomentsollwerte von einem Einstellorgan, Batterieladezustandswerte und die Einstellung des Betriebsartenwahlschalters der mobilen Vorrichtung zugeführt werden und die in Abhängigkeit von den zugeführten Werten die Werte des Gesamtstrombedarfs und des vom Brennstoffzellensystem unter Berücksichtigung dessen Trägheitsverhaltens und des ausgewählten Dynamik-Verhaltens beizutragenden Strombedarfs berechnet und entsprechende Sollwerte an die Stellglieder des Brennstoffzellensystems ausgibt, und wobei jeweils die Werte des von der Brennstoffzelle ausgegebenen Stroms bestimmt, vom Wert des vom Antriebsmotor benötigten Stroms subtrahiert werden und unter Begrenzung auf einen maximal angebbaren Entlade- oder Ladestrom der Speicherbatterie als Stromsollwerte dem Gleichstrom-Gleichstrom-Wandler zugeführt werden. Die Energiesteuereinheit erkennt an Hand der ihr zugeführten Werte die Betriebsart und den Betriebszustand der mobilen Vorrichtung und folgert daraus die Art des Strombeitrags, den das Brennstoffzellensystem für den Stromrichter und die Hilfsantrieb leisten muß, wobei die Speicherbatterie die Strombeiträge für die schnellen Dynamikanforderungen leistet. Das erfindungsgemäße Verfahren ermöglicht eine sehr schnelle Einstellung des vom Gleichstrom-Gleichstrom- Wandler, im folgenden auch DC/DC-Wandler genannt, zur Erzielung einer guten Fahrdynamik aufzubringenden Stroms.

Bei einer weiteren günstigen Ausführungsform ist vorgesehen, daß die Summe des jeweils vom Antriebsmotor über den Stromrichter bezogenen Werts des Stroms und der von den weiteren Verbrauchern der Vorrichtung bezogenen Werte der Ströme vom Wert des von der Brennstoffzelle ausgegebenen Stroms subtrahiert wird und bei Erreichen eines maximal vorgegebenen Werts des Entladestroms auf diesen Entladestrom begrenzt wird und daß das Ergebnis der Differenz der von den weiteren Verbrauchern bezogenen Werte der Ströme vom Wert des verfügbaren Brennstoffzellenstroms aufgeschaltet wird und der Steuereinheit der Vorrichtung als verfügbarer Wert des Stroms gemeldet wird. Der verfügbare Strom ist ein dynamischer Strom als Antwort auf die Anforderung eines Stroms. Das Brennstoffzellensystem dosiert soviel Kraftstoff, dass dieser Strom gezogen wird. Die Steuereinheit ist daher in der Lage, die Stromanforderungen an die mobile Vorrichtung jeweils auf die verfügbaren Werte des Stroms abzustimmen.

Besonders vorteilhaft ist es, mit einem Speicherglied n-ter Ordnung die Übergangsfunktion des Brennstoffzellensystems als Regelstrecke nachzubilden, das Speicherglied und eine Steuereinheit für das dynamische Energiesystem mit dem von der Fahrzeugsteuereinheit der mobilen Vorrichtung ausgegebenen Drehmomentsollwert zu beaufschlagen und der Steuereineinheit zusätzlich die gemäß der Übergangsfunktion der Regelstrecke erzeugten Werte zuzuführen, und durch die Steuereinheit den vom dynamischen Energiesystem aufzubringenden Strom über ein Begrenzungsglied mit einer Rampe, deren Steigung in Abhängigkeit von Steuersignalen aus der Vorrichtung auf wenigstens zwei Werte einstellbar ist, als Sollstromwert dem DC/DC-Wandler zuzuführen. Bei dieser Ausführungsform wird eine besonders gute Gesamtdynamik erreicht. Die Leistungsfähigkeit des dynamischen Energiesystems wird dabei optimal ausgeschöpft. Beispielsweise wird beim schnellen Start der mobilen Vorrichtung, d. h. bei Startbeginn und geringer Leistung des Brennstoffzellensystems, die Leistung vom dynamischen Energiesystem aufgebracht, so daß das für die Beschleunigung der Vorrichtung notwendige große Drehmoment schnell verfügbar ist. Bei hohen Drehzahlen wird vom dynamischen Energiesystem die Leistung für die Beschleunigung zur Erreichung einer höheren Drehzahl ausgegeben. Mittels der Energiesteuereinheit wird ein gleitender Übergang der Leistungsbeiträge von Brennstoffzelle und Energiesystem erreicht.

Zur Erzielung einer hohen Beschleunigung ist es zweckmäßig, während der Dauer eines Beschleunigungsvorgangs der Vorrichtung, bei dem von der Steuereinheit durch Vorsteuerung ein Solldrehmoment und aus einem Kennfeld mit dem Drehmoment als Funktion des maximalen Stroms und der Drehzahl ein Maximalstrom für die Erzeugung des Solldrehmoments bestimmt wird, die Differenz zwischen dem vom Brennstoffzellensystem während des Beschleunigungsvorgangs erzeugten Strom und dem für die Erzielung der hohen Beschleunigung gemäß dem Kennfeld benötigten Strom durch das dynamische Energiesystem zu erzeugen. Mit dieser Ausführungsform wird bei einer mobilen Vorrichtung, insbesondere einem Elektrofahrzeug, eine besonders gute Längsdynamik erzeugt, da das dynamische Energiesystem optimal ausgenutzt wird.

Um die Energie der mobilen Vorrichtung gut auszunutzen, wird die bei der Verminderung der Last des Antriebsmotors anfallende überschüssige Energie zurückgewonnen und im dynamischen Energiesystem gespeichert.

Bei einem negativen Lastsprung, z. B. aufgrund einer entsprechenden Änderung des Stellorgans für die vom Antriebsmotor abzugebende Leistung wird der Stromrichter auf Umkehrbetrieb eingestellt. Ebenso wird der DC/DC-Wandler so eingestellt, daß er Strom in die Speicherbatterie einspeist und diese auflädt. Der Ladestrom wird durch die Ladekontrolle bestimmt, die in Abhängigkeit vom Ladezustand der Speicherbatterie die Ladeströme über den DC/DC-Wandler steuert. Bei einer Verminderung des vom Antriebsmotor abzugebenen Solldrehmoments durch die Vorgabe eines geringeren Drehmomentsollwerts wird vorzugsweise aus dem Kennfeld der für das geringere Drehmoment erforderliche Strom bestimmt und an Hand des jeweiligen Belastungszustands des Brennstoffzellensystems bei der Vorgabe des geringeren Drehmomentsollwerts und der Speicherfähigkeit der Speicherbatterie diese nach der Umkehr des Stromflusses im Stromrichter mit dem maximal zulässigen Ladestrom über den.DC/DC-Wandler geladen und das Brennstoffzellensystem auf den für das geringere Solldrehmoment erforderlichen Strom eingestellt. Mit dieser Maßnahme wird eine Überhitzungsgefahr des Brennstoffzellensystems vermieden.

Bei einer anderen bevorzugten Ausführungsform wird die Richtung der Brenngas- und Luftzufuhr zur Brennstoffzelle periodisch umgekehrt, wobei während der Umkehr der Gaszufuhr ein auf die momentane Stromausgabe des Brennstoffzellensystems und/oder des dynamischen Energiestroms unmittelbar vor der Umkehrung abgestimmter Stromimpuls vom dynamischen Energiesystem über den DC/DC-Wandler in den Stromrichter eingespeist wird. Auf diese Weise werden unerwünschte Schwankungen des Antriebsmoments vermieden.

Es ist weiterhin zweckmäßig, wenn die Ausgangsspannung des Brennstoffzellensystems auf Erreichen oder Unterschreiten eines noch für den einwandfreien Betrieb zulässigen Spannnungsgrenzwerts überwacht wird, wobei bei Erreichen des Spannungsgrenzwerts die Spannung durch Stromeinspeiung über den DC/DC-Wandler auf wenigstens den zulässigen Grenzwert geregelt wird. Insbesondere werden die Belastungssituation des Energieversorgungssystems beim Eingreifen der Regelung und die Häüfigkeit des Eingreifens der Spannungsregelung während des Betriebs des Energieversorgungssystems registriert, wobei nach Überschreiten einer vorgebbaren Anzahl von Eingriffen die Dynamik durch Reduzierung der Anstiegsgeschwindigkeit des Stroms des Brennstoffzellensystems und/oder des dynamischen Energiesystems und die Größe der abgegebenen Leistung begrenzt werden.

Günstig ist es, die Anstiegsgeschwindigkeit der Ausgangsleistung des Brennstoffzellensystems bei ausreichender Speicherbatterieladung bei Erhöhung des Drehmomentsollwerts zu begrenzen und den für die Abgabe des Drehmomentsollwerts notwendigen Strom während des Anstiegs der Ausgangsleistung durch das dynamische Energiesystem zu liefern. Dabei ist es für einen Betrieb des Energieversorgungssystems mit hohem Wirkungsgrad vorteilhaft, durch eine Rampe mit geringer Anstiegsgeschwindigkeit den durch den Drehmomentsollwert geforderten Lastzustand des Brennstoffzellensystems anzunähern.

Besonders zweckmäßig ist es, wenn mittels des BetriebsartenWahlschalters wenigstens drei Betriebsarten für den Antriebsmotor einstellbar sind, von denen eine auf eine große Dynamik der mobilen Vorrichtung, eine zweite auf eine geringere Dynamik bei höherem Wirkungsgrad und eine dritte auf Stop- und Go-Betrieb gerichtet ist, wobei im Stop- und Go-Betrieb bei Beschleunigungen die Ströme für den Antriebsmotor vom dynamischen Energiesystem erzeugt werden und beim Abbremsen darin gespeichert werden.

Der vom dynamischen Energiesystem aufzubringende Anteil des Stroms an dem für die Erzeugung einer angeforderten Antriebsleistung notwendigen Strom wird insbesondere mit dem jeweils vorhandenen Istwert des von der mobilen Vorrichtung verbrauchten Stroms und dem von Brennstoffzellensystem verfügbaren Strom bestimmt.

Bei reduzierter Leistung des Brennstoffzellensystems wird vorzugsweise ein Notlauf des Energieversorgungssystems durch Spannungsregelung im Hochvoltnetz mittels des DC/DC-Wandlers und Einspeisung von Strom aus der Speicherbatterie gewährleistet.

Bei einer Anordnung gemäß dem Oberbegriff des Anspruchs 15 wird das Problem erfindungsgemäß dadurch gelöst, dass ein Betriebsartenwahlschalter für die Einstellung verschiedener Betriebsarten des Energieversorgungssystems mit der Energiesteuereinheit verbunden ist, und daß zudem die eingestellte Betriebsart zur Erzeugung der Differenz zwischen der Teilleistung des Brennstoffzellensystems und der Sollleistung der Speicherbatterie unter Berücksichtigung der ausgewählten Dynamik-Verhaltensweise verarbeitet wird.

Der von der Batterie beizutragende Strom wird aus dem Fahrzeugstrom und dem verfügbaren Strom der Brennstoffzelle bestimmt, was nur eine sehr kurze Zeit beansprucht.

Die Erfindung wird im folgenden an Hand eines in einer Zeichnung dargestellten Ausführungsbeispiels näher beschrieben, aus dem sich weitere Merkmale, Einzelheiten und Vorteile ergeben.

Dabei zeigen:
- Fig. 1:: ein Blockschaltbild einer Anordnung zur Steuerung der ein Brennstoffzellensystem und ein dynamisches Energiesystem sowie eine Energiesteuereinheit aufweisenden Energieversorgung einer mobilen Vorrichtung mit wenigstens einem elektrischen Antriebsmotor,
- Fig. 2:: ein Block- bzw. Signalflußschaltbild der in Fig. 1 dargestellten Energiesteuereinheit,

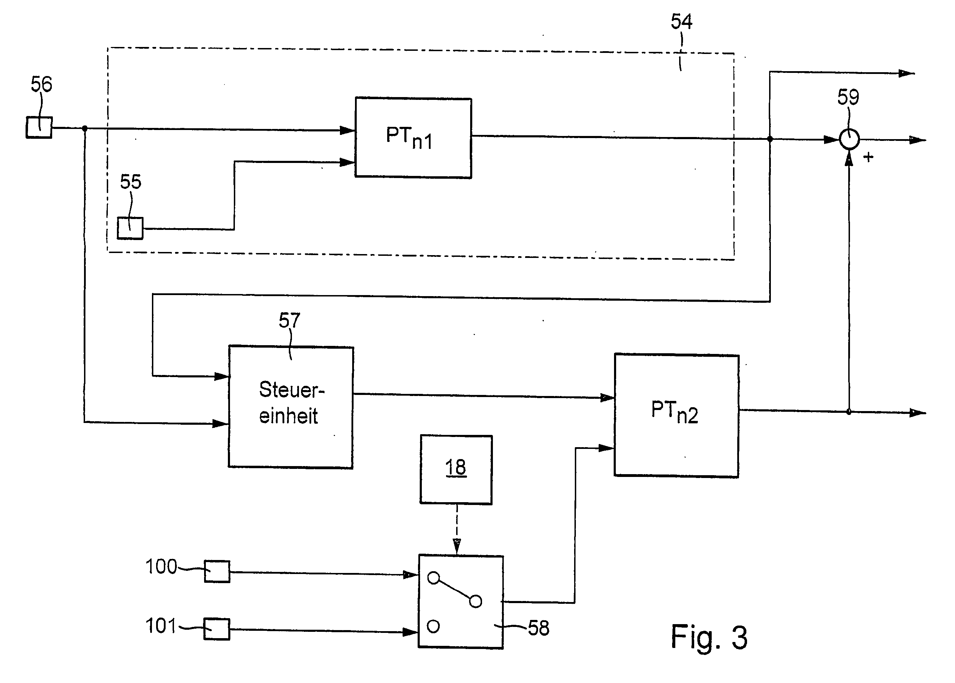

- Fig. 3:: ein Blockschaltbild eines Modells eines Brennstoffzellensystems mit einem Methanol-Reformer und mit einer Steuereinheit,
- Fig. 4:: ein Diagramm des Brennstoffzellen- und des Energiesystemstroms bei maximaler Beschleunigung in Abhängigkeit von der Zeit,
- Fig. 5:: ein Diagramm des Brennstoffzellen- und des Energiesystemstroms bei einer unterhalb der maximalen Beschleunigung liegenden Beschleunigung,
- Fig. 6:: ein Diagramm von Strömen des Brennstoffzellensystems der Vorrichtung und des Energiesystems in Abhängigkeit von der Zeit bei verschiedenen Betriebszuständen.

Eine mobile Vorrichtung, insbesondere ein Fahrzeug 1, enthält eine Antriebsmotoreinheit 2, die einen Stromrichter 3 aufweist, an den ein nicht näher dargestellter Motor angeschlossen ist, bei dem es sich um einen Asynchronmotor handeln kann. Als mobile Vorrichtung kann auch eine Lokomotive oder ein Gabelstapler vorgesehen sein. Der Motor wird mittels des Stromrichters 3 durch eine Motorsteuerung 4 drehzahl- bzw. drehmomentgesteuert. Der Stromrichter 3 ist auf seinen, dem Motor entgegengesetzten Anschlüssen mit einem Gleichstromnetz 5 verbunden, das als Hochvoltnetz bezeichnet wird und eine Spannung im Bereich von 250 - 450 V aufweist. Neben der Antriebsmotoreinheit 2 sind im Fahrzeug 1 weitere, mit 6 bezeichnete Stromverbraucher vorhanden. Bei diesen Verbrauchern handelt es sich z. B. um einen Kompressor, um Lüfter, um eine Wasserpumpe, um die Verbraucher einer Klimaanlage und um einen DC/DC-Wandler zwischen dem Hochvoltnetz und einem 12V, 24 oder 42V Niedervoltnetz mit weiteren Verbrauchern wie Scheinwerferlampen, Scheibenwischermotoren, Fensterscheibenantrieben, Blinkern usw. Das Gleichstromnetz 5 ist an die nicht näher bezeichneten, elektrischen Ausgänge eines Brennstoffzellensystems 7 mit einer nicht näher bezeichneten Brennstoffzelle angeschlossen. Das Brennstoffzellensystem 7 enthält an sich bekannte Elemente wie einen Tank mit flüssigem Kraftstoff z. B. Methanol, einen Reformer, einen Wassertank und einen Kompressor sowie eine Brennstoffzelle, der Brenngas aus dem Reformer und Luft aus dem Kompressor zugeführt wird. Eine Brennstoffzellensteuerung 8 betätigt die Stellglieder des Brennstoffzellensystems, um diese zur Abgabe einer entsprechenden Leistung zu veranlassen. Mit dem Gleichstromnetz 5 ist auch ein DC/DC-Wandler 9 verbunden, der für bidirektionalen Betrieb ausgebildet ist und auf seinen, dem Hochvoltnetz 5 abgewandten Anschlüssen mit einer Speicherbatterie 10 verbunden ist, die z. B. eine Spannung von 200 V erzeugt. Anstelle einer Speicherbatterie kann auch ein Superkondensator oder ein anderer Energiespeicher vorgesehen sein.

Mit dem DC/DC-Wandler 9 ist eine DC/DC-Wandlersteuerung 11 verbunden, die die Stromrichtung des DC/DC-Wandlers und die ausgegebene Stromstärke einstellt und diesen auf Spannungsregelung auf der Seite des Gleichstromnetzes 5 umstellen kann. Die Speicherbatterie 10 ist an ein Batteriemanagementsystem 12 angeschlossen.

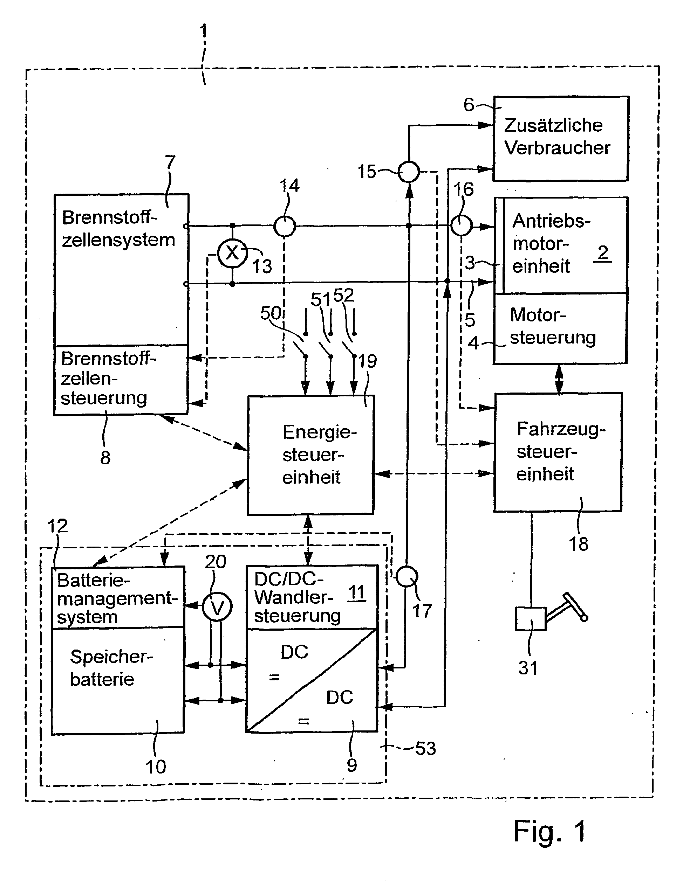

Für die Messung der Gleichspannung des Gleichstromnetzes 5 ist ein Spannungssensor 13 an die Ausgänge der Brennstoffzelle angeschlossen. Der von der Brennstoffzelle ausgegebene Strom wird mit einem Stromsensor 14 gemessen. Dieser Strom wird im folgenden als Brennstoffzellenfahrzeugstrom bezeichnet. Der von den zusätzlichen Verbrauchern bezogene Strom wird mit einem Stromsensor 15 gemessen und ist im folgenden als Hilfsstrom bezeichnet. Der zu der Antriebssteuereinheit 2. über den Stromrichter 3 fließende oder aus dem Stromrichter 3 zurückgespeiste Strom wird mit einem Stromsensor 16 gemessen und ist im folgenden auch als Fahrstrom bezeichnet. Der vom oder zum DC/DC-Wandler auf der Gleichstromnetzseite fließende Strom wird mit einem Stromsensor 17 gemessen und ist im folgenden als DC-Wandlerstrom bezeichnet. Die Spannung der Batterie 10 wird mit einem Spannungssensor 20 gemessen, der mit dem Batteriemanagementsystem 12 verbunden ist. Die Motorsteuerung 4 ist mit einer Fahrzeugsteuereinheit 18 über Datenleitungen, die in Fig. 1 gestrichelt gezeichnet sind, verbunden. Eine Energiesteuereinheit 19 ist über in Fig. 1 gestrichelt dargestellte Datenleitungen mit der Fahrzeugsteuereinheit 18, der Brennstoffzellensteuerung 8, dem Batteriemanagementsystem 12 und der DC/DC-Wandlersteuerung 11 verbunden. Der Spannungssensor 13 und der Stromsensor 14 sind mit der Brennstoffzellensteuerung 8 verbunden. Der Stromsensor 15 und der Stromsensor 16 sind mit der Fahrzeugsteuereinheit 18 verbunden. Der Spannungssensor 20 und der Stromsensor 17 sind mit dem Batteriemanagementsystem 12 verbunden, das alle Daten der Batterie 10 überwacht und ständig den Ladestrom der Batterie 10 ermittelt.

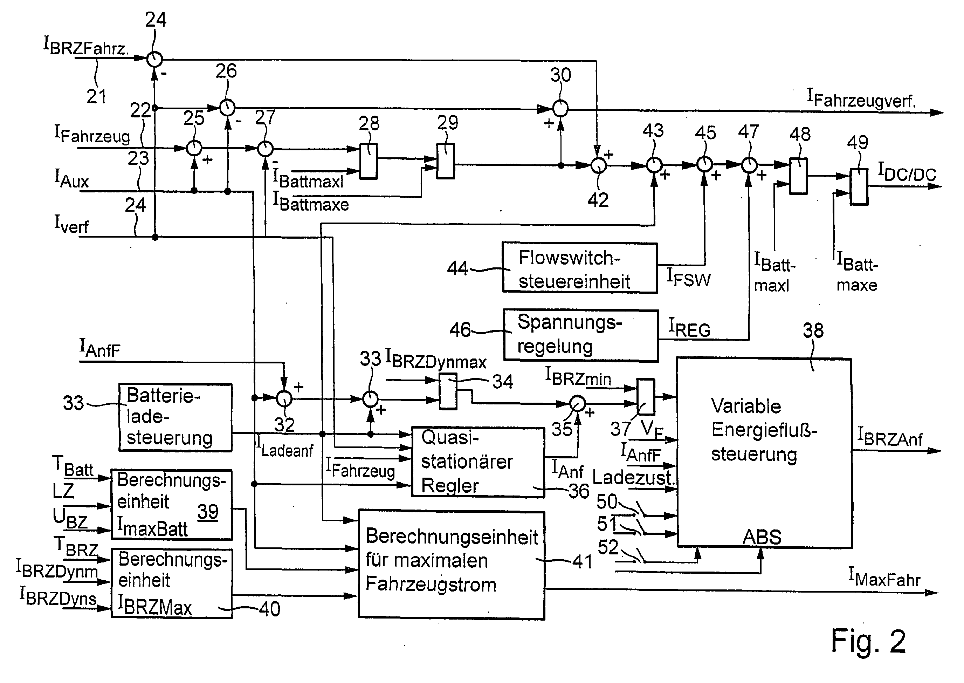

Der Energiesteuereinheit 19 wird von der Brennstoffzellensteuerung 8 der Wert des vom Stromsensor 14 gemessenen Brennstoffzellenfahrzeugstroms, im folgenden I_{BRZFahrz} genannt, auf einer Datenleitung 21 gemeldet. Der Wert des vom oder gegebenenfalls von mehreren Antriebsmotoren zum jeweiligen Zeitpunkt verbrauchten Stroms, der in den Stromrichter 3 fließt und im folgenden mit I_{Fahrzeug} bezeichnet ist, wird der Energiesteuereinheit 19 auf einer Datenleitung 22 zugeführt. Auf einer Datenleitung 23 wird der Energiesteuereinheit 19 der Wert des Hilfsstroms, im folgenden I_{Aux} bezeichnet, auf einer Datenleitung 23 gemeldet. Auf einer weiteren Datenleitung 24 wird der Energiesteuereinheit 19 der Wert des von der Brennstoffzelle verfügbaren Stroms, im folgenden I_{Verf} bezeichnet zugeführt. Der Wert I_{Verf} ist ein Grenzwert und gibt an, wieviel Strom von der Brennstoffzelle gezogen werden darf. Dieser Strom I_{Verf} ist ein dynamischer Wert als Antwort auf einen stromwert I_{BRZAnf}, der von der Enegieflußsteuerung 38 an die Stellglieder des Brennstoffzellensystems 7 ausgegeben wird. Das Brennstoffzellensystem 7 dosiert soviel Kraftstoff, daß dieser Strom I_{Verf} gezogen werden darf und muß. Wird zuviel Strom gezogen, ist die Brennstoffzelle unterversorgt. Wird zuwenig Strom gezogen, wird zuviel H₂ erzeugt, was dem Reformersystem schadet. I_{Verf} ist, somit ein dynamischer Strom, der auch gezogen werden soll. Der Wert I_{BRZFahrz} wird vom Wert I_{Verf} subtrahiert, was in Fig. 2 durch die Summierstelle 24a dargestellt ist. Die Stromwerte Fahrzeug und I_{Aux} werden einander überlagert, was in Fig. 2 mit einer Summierstelle 25 dargestellt ist. Vom Wert I_{Verf} wird der Wert I_{Aux} subtrahiert. Dies ist in Fig. 2 mit 26 bezeichnet. Von der Summe aus I_{Fahrzeug} und I_{Aux} wird in einer mit 27 bezeichneten Summierstelle der Wert I_{Verf} subtrahiert. Wenn das Ergebnis I_{Fahrzeug} + I_{Aux} - I_{Verf}, größer als ein maximal vorgebbarer, gespeicherter Entladestromwert der Speicherbatterie 10 ist, wird dieser mit I_{Battmaxl} bezeichnete Stromwert in einem Vergleicher 28 weiterverarbeitet. Der vom Vergleicher 28 weitergeleitete Wert wird einem weiteren Vergleicher 29 zugeführt, in dem ein Vergleich mit dem vorgebbaren, gespeicherten maximal zulässigen Entladestrom, der in Fig. 2 mit I_{Battmaxe} bezeichnet ist, stattfindet. Auf diesen Wert wird der Wert am Ausgang des Vergleichers 29 begrenzt, wenn der Eingangswert größer ist. Der Ausgangswert des Vergleichers 29 wird in einer Summierstelle 30 der Differenz I_{verf} - I_{Aux} überlagert und ergibt einen Stromwert I_{Fahrzeugverf}, der der Fahrzeugsteuereinheit 18 zugeführt wird. Der Fahrzeugsteuereinheit 18 steht daher der maximal verfügbare Stromwert zur Verfügung, so daß diese Einheit keine höhere Stromanforderung ausgibt.

Die Fahrzeugsteuereinheit 18, der durch einen Sollwertgeber 31 die vom Antriebsmotor abzugebende Leistung gemeldet wird, berechnet aus der Position des Sollwertgebers und der von einem Sensor gemessenen Drehzahl des Antriebsmotors aus einer im Probebetrieb gespeicherten Tabelle des Drehmoments als Funktion des Stroms und der Drehzahl, einen Sollstromwert für das Fahrzeug, im folgenden mit I_{AnfF} bezeichnet, der in einer Summierstelle 32 dem Wert I_{Aux} überlagert wird. Eine Batterieladesteuerung 33, die Teil der Energieflusssteuereinheit 19 ist, überwacht den Ladezustand der Speicherbatterie 10 mittels nicht näher dargestellter Sensoren und erzeugt in Abhängigkeit von der gemessenen Batterietemperatur und der aus dem gemessenen Drehzahlverlauf pro Zeiteinheit ermittelten Fahrweise bedarfsweise eine Ladestromanforderung, die mit I_{Ladeanf} bezeichnet ist. Der Wert I_{Ladeanf} wird in einer Summierstelle 34 der Summe aus I_{AnfF} und I_{Aux} überlagert. Das in der Summierstelle 32 berechnete Ergebnis wird einem Vergleicher 34 zugeführt, der feststellt, ob der Eingangswert größer als ein maximal vorgebbarer, gespeicherter, dynamischer Brennstoffzellenstromwert, im folgenden mit I_{BRZDynmax} bezeichnet, ist.

Falls der Ausgangswert der Summierstelle größer als I_{BRZDynmax} ist, wird dieser Wert weiterverarbeitet in einer Summierstelle 35, in der ein Stromwert I_{Anf} überlagert wird. Der Wert I_{Anf} wird von einem quasistationären Regler 36 berechnet. Dem quasistationären Regler werden die Werte Fahrzeug, I_{Aux}, I_{Verf} und I_{Ladeanf} zugeführt, aus denen der Regler I_{Anf} berechnet.

Die in der Summierstelle 35 gebildete Summe wird in einem Vergleicher 37 mit einem Stromminimalwert, im folgenden I_{BRZmin} genannt, verglichen. Dieser Stromminimalwert wird an eine variable Energieflußsteuerung 38 weitergeleitet, wenn das Ergebnis der Summierstelle 35 kleiner als dieser Wert ist.

Einer Berechnungseinheit 39 für Grenzwerte des Batteriestroms wird von einem nicht dargestellten Sensor der Temperaturwert der Batterie T_{Batt}, von der Batterieladesteuerung 33 der Ladezustand der Batterie LZ und der Wert der Spannung der Brennstoffzelle U_{BZ} zugeführt. Aus diesen Werten bestimmt die Berechnungseinheit 39 einen maximalen Batteriestromwert I_{MaxBatt}.

Eine weitere Berechnungseinheit 40 für den maximalen Brennstoffzellenstrom I_{maxBRZ} erhält von einem nicht dargestellten Temperatursensor der Brennstoffzelle T_{BRZ}, den maximalen dynamischen Brennstoffzellenstromwert I_{BRZDynmax} und einen vorab gespeicherten, z. B. durch Versuche ermittelten, maximalen statischen Wert des Brennstoffzellenstroms I_{BRZmaxstat} zugeführt.

Der Wert der Ladeanforderung I_{Ladeanf} , der Wert I_{Aux} und die Werte I_{maxBatt} und I_{BRZmax;} werden einer Berechnungseinheit 41 zugeführt, die daraus den Wert des maximalen Fahrzeugstroms I_{maxFahr} bestimmt und der Fahrzeugsteuereinheit 19 zuführt.

Der Wert des Ausgangs des Vergleichers 20 wird in einer Summierstelle 42 der Differenz aus I_{BRZFahrz} und I_{Verf.} überlagert. Das so ermittelte Ergebnis wird dem Wert I_{Ladeanf.} in einer Summierstelle 43 hinzugefügt.

Das Brennstoffzellensystem 7 hat eine Flowswitch-Kompensation, mit der der Leistungseinbruch beim Umschalten der Richtung der Gaszufuhr zur Brennstoffzelle ausgeglichen wird. Eine Flowswitch-Steuereinheit 44 erzeugt während des Umschaltzeitraums einen Stromwert I_{FSW}, der in einer Summierstelle 45 dem Ergebnis aus der Summierstelle 43 hinzugefügt wird.

Um zu verhindern, daß die Spannung im Hochvoltnetz 5 auf einen Wert absinkt, der für den Betrieb der Brennstoffzelle gefährlich ist, ist eine Spannungsregeleinheit 46 vorgesehen, mit der die Spannung des Hochvoltnetzes auf Erreichen oder Unterschreiteneines unteren Grenzwerts überwacht wird. Sobald dieser Grenzwert erreicht oder unterschritten wird, gibt die Spannungsregeleinheit 46 einen Wert I_{REG} aus, der in einer Summierstelle 47 dem Ergebnis des Ausgangs der Summierstelle 45 überlagert wird. Der Wert am Ausgang der Summierstelle 47 wird einem Vergleicher 48 zugeführt, der diesen Wert auf den maximal eingestellten Ladestrom begrenzt, wenn der Eingangsstrom größer ist.

Der Ausgangswert des Vergleichers 48 wird einem weiteren Vergleicher 49 zugeführt, der den Wert auf den maximal eingestellten Entladstrom I_{Battmaxe} begrenzt, wenn der Eingangswert höher ist. Der Ausgangswert des Vergleichers 48 wird als Stromsollwert I_{DC/DC} der DC/DC-Wandlersteuerung 11 zugeführt.

Die variable Energieflußsteuerung 38, ein wesentlicher Bestandteil der Energiesteuereinheit 19, erhält Meßwerte der Fahrzeugsgeschwindigkeit V_{F}, des Sollwertgebers 31 über das vom Antriebsmotor verlangte Solldrehmoment Mₛₒₗₗ, den Wert I_{AnfF} von der Fahrzeugsteuereinheit 18 und den Batterieladezustand von der Batterieladesteuerung 33. Weiterhin ist im Fahrzeug 1 ein Betriebsartenwahlschalter, bestehend aus einer Reihe von Schaltern 50, 51, 52, vorhanden, mit denen von Hand eine bestimmte Betriebsart des Dynamik-Verhaltens des Fahrzeugs 1 eingestellt werden kann. Die Schaltstellungen der Schalter 50, 51, 52 werden der variablen Energieflußsteuerung 38 zugeführt. Zusätzlich wird der variablen Energieflußsteuerung 38 von der Fahrzeugsteuereinheit 18 ein Signal über einen Eingang ABS zugeführt, das sich auf eine Antiblockierbremsung bezieht und dies der variablen Energieflußsteuerung 38 meldet. Die Energieflusssteuerung 38 verarbeit diese Werte und gibt einen Wert **I**_{BRZAnf} an die Stellglieder des Brennstoffzellensystems 7 aus.

Die Speicherbatterie 10 mit dem Batteriemanagementsystem 12 und der DC/DC-Wandler 9 mit der DC/DC-Wandlersteuerung 11 bilden ein dynamisches Energiesystem 53. In der variablen Energieflußsteuerung 38 ist ein Modell 54 des Brennstoffzellensystems 7 mit dem Methanol-Reformer und den dazugehörigen, an sich bekannten Bauelementen gespeichert. Das Modell 54 weist ein rückwirkungsfreies Speicherglied n-ter Ordnung PTn₁, auf. Der Eingang 56 des Modells 54 wird von der Fahrzeugsteuereinheit 18 jeweils mit dem Drehmomentsollwert beaufschlagt. Die Zeitkonstante des Speicherglieds PTn₁ wird von einem Eingang 55 des Modells 54 eingestellt. Das Speicherglieds PTn₁ wird auch als Verzögerungsglied bezeichnet. Der Eingang 56 und der Ausgang des Speicherglieds PTn₁ sind mit Eingängen einer Steuereinheit 57 verbunden, die das Verhalten des dynamischen Energiesystems 53 beeinflußt.

Die Steuereinheit 57 ist ausgangsseitig mit einem Speicherglied n-ter Ordnung PTn₂ verbunden, das einen weiteren mit einem Umschalter 58 verbundenen Eingang aufweist, der von der Fahrzeugsteuereinheit 18 eingestellt wird. Die Einstellung hängt davon ab, ob sich das Fahrzeug 1 in der Antiblockierbremssystembetriebsweise befindet oder nicht. Über den Umschalter 58 werden im Speicherglied PTn₂ zwei verschiedene Zeitkonstanten über die Eingänge 100 bzw. 101 eingestellt, von denen die eine auf die Dynamik im Normalbetrieb des dynamischen Energiesystems 53 und die andere auf den Antiblockierbremsbetrieb eingestellt ist. Der Ausgang des Speicherglieds PTn₁ zeigt die "langsame" Reaktion des Brennstoffzellensystems an. Der Ausgang des Speicherglieds PTn₂ zeigt die "schnelle" Reaktion des dynamischen Energiesystems 53 an.

Die Ausgangswerte der Speicherglieder PTn₁ und PTn₂ werden in einer Summierstelle 59 einander überlagert, die die Summe der "schnellen" und "langsamen" Reaktionen anzeigt. Die Ausgangswerte der Speicherglieder PTn₁ und PTn₂ und der Summierstelle werden von der variablen Energieflußsteuerung 38 verarbeitet, wobei verschiedene Dynamik-Betriebsarten des Fahrzeugs 1 berücksichtigt werden. Das Speicherglied PTn₂ begrenzt die Energielieferung des dynamischen Energiesystems in seiner Dynamik und wird auch als Begrenzung bezeichnet.

In einer ersten Betriebsart, die als "Beschleunigungs-Verstärkung" oder "Beschleunigungs-Boost" bezeichnet werden kann, wird das dynamische Energiesystem 53 zur Verbesserung der Längsdynamik des Fahrzeugs eingesetzt. Das dynamische Energiesystem 53 wird dabei von der Energiesteuereinheit 19 für die Dauer eines Beschleunigungsvorgangs, also zeitlich begrenzt, zur Abgabe von Leistung veranlaßt, die additiv zu der vom Brennstoffzellensystem 7 erzeugten Leistung wirkt. Hierbei steuert die Fahrzeugsteuereinheit 18 den Drehmomensolltwert in Abhängigkeit vom verfügbaren Strom aus dem Kennfeld M_{Soll} = F (Iₘₐₓ. n) vor. Iₘₐₓ ist hierbei der Summenstrom des Brennstoffzellensystems 7 und des dynamischen Energiesystems 53.

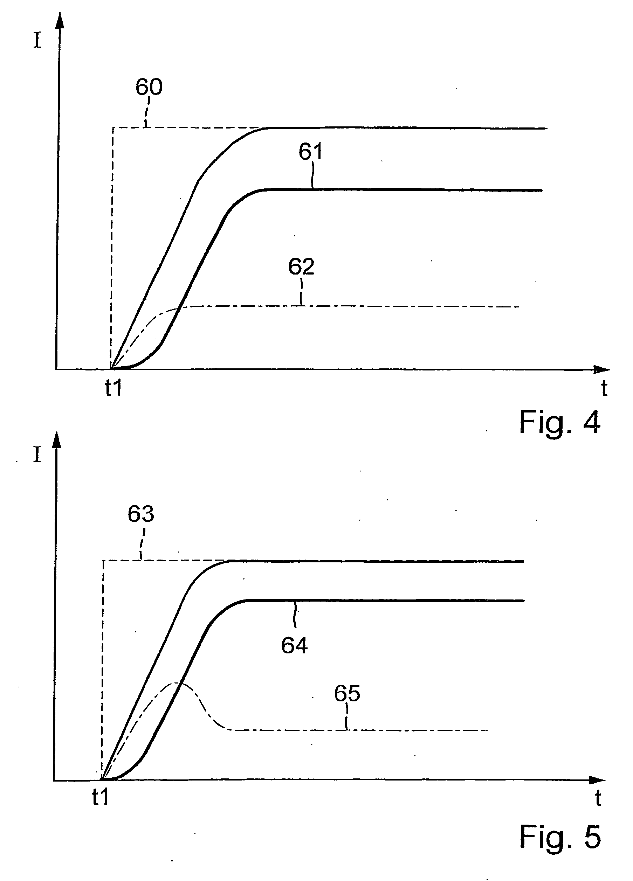

In Fig. 4 ist der Strom in Ordinatenrichtung als Funktion der Zeit t in Abszissenrichtung dargestellt. Zum Zeitpunkt t₁ erfolge ein Sollwertsprung auf den Sollwert I_{AnfF}, der in Fig. 4 mit 60 bezeichnet ist. In der Betriebsweise "Beschleunigungs-Boost" fordert die variable Energieflusssteuerung 38 den maximalen Strom des Brennstoffzellensystems 7 I_{BRZMax} und den maximalen Strom des dynamischen Energiesystems 53 I_{BattMax} an. Der Brennstoffzellenstrom I_{BZ}, der in Fig. 4 mit 61 bezeichnet ist, steigt nach einer Übergangfunktion bis auf I_{BRZmax} an, den die variable Energieflusssteuerung 38 an Hand des Modells 54 erfaßt und das dynamische Energiesystem 53 über die Einstellung des DC/DC-Wandlers 9 zur Abgabe des mit 62 in Fig. 4 bezeichneten Stroms I_{Batt} veranlaßt, der mit der durch das Speicherglied PTn₂ bestimmten Rampe ansteigt und auf dem Strom I_{BattMax} während der Dauer der "Beschleunigungs-Verstärkung" verharrt.

Die Fig. 5 zeigt den Stromverlauf als Funktion der Zeit bei einem Sollwertsprung 53, der kleiner als die Summe I_{BRZMax} + I_{Battmax} ist. Die variable Energieflußsteuerung 38 veranlaßt die Brennstoffzelle I_{BRZ} zur Abgabe des Stroms I_{BRZMax}. Der Verlauf des Stroms I_{BRZ} ist in Fig. 5 mit 64 bezeichnet. Der Anstieg erfolgt mit der Übergangsfunktion des Brennstoffzellensystems. Das dynamische Energiesystem 53 erzeugt den Strom I_{Batt}, dessen Verlauf in Fig. 5 mit 65 bezeichnet ist und der zum Strom I_{BRZ} addiert wird, wodurch der Sollwert 63 schneller erreicht wird. Sobald der Sollwert 63 erreicht ist, speist die Brennstoffzelle den Strom I_{BRZMax} ein, während der Strom I_{Batt} auf einen kleineren Wert zurückgeht, auf dem er während der Dauer der Beschleunigungs-Verstärkung verharrt.

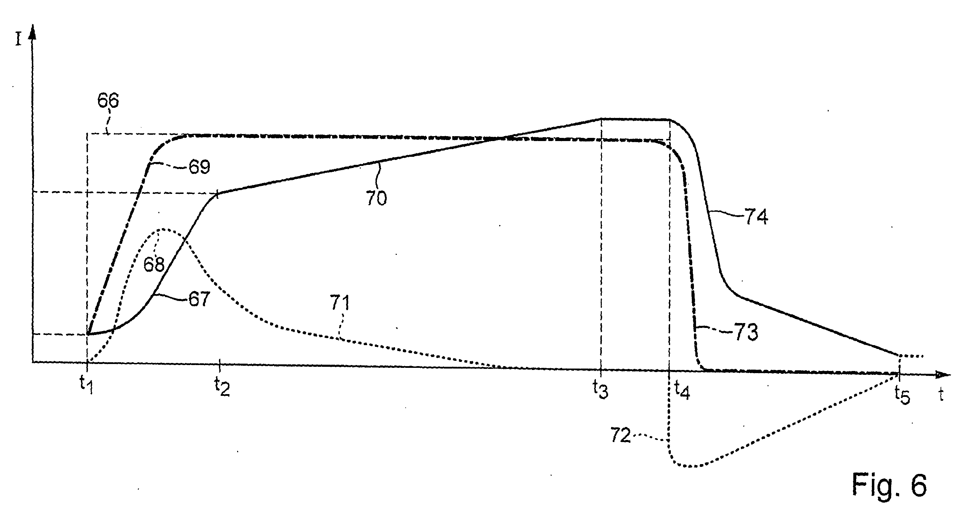

In Fig. 6 ist der Verlauf von Strömen I des Energieversorgungssystems des Fahrzeugs 1 und der Antriebseinheit in Abhängigkeit von der Zeit t in verschiedenen Betriebsweisen, wie "Dynamische Verstärkung", "Quasistatischer Betrieb" und "Bremsbetrieb" dargestellt. Es sei angenommen, daß die Fahrzeugsteuereinheit 18 zum Zeitpunkt t₁ einen Strom I_{AnfF} für den Antriebsmotor anfordert. Der Sollstrom I_{AnfF} ist in Fig. 1 mit 66 bezeichnet. Die variable Energieflusssteuerung 38 beaufschlagt die Stellglieder des Brennstoffzellensystems 7 mit einem Brennstoffzellenanförderungsstrom I_{BRZAnf} der den Brennstoffzellenstrom I_{verf} nach dem in Fig. 6 mit 67 bezeichneten Verlauf bis zu einem Wert I_{BRZDynmax} zum Zeitpunkt t₂ ansteigen läßt. Ab dem Zeitpunkt t₂ steuert die variable Energieflußsteuerung 38 den Brennstoff zellenstrom I_{verf} so, daß er linear mit einstellbarer Steigung bis auf den auf den maximalen statischen Wert I_{BRZMaxstat} ansteigt. Dieser Wert ist zum Zeitpunkt t₃ erreicht.

Vom Zeitpunkt t₁ bis t₂ arbeiten das Brennstoffzellensystem 7 und das dynamische Energiesystem 53 in der Betriebsart: "Dynamische Verstärkung". Dabei wird das dynamische Energiesystem 53 zur Abgabe eines hohen Batteriestroms I_{Batt} veranlaßt, der dem Strom des Brennstoffzellensystems I_{verf} hinzugefügt wird. Der Strom I_{Batt}, dessen Verlauf in Fig. 6 mit 68 bezeichnet ist und der gemäß der Einstellung des Speicherglieds Ptn₂ mit einer auf die Anstiegsgeschwindigkeit des Brennstoffzellenstroms abgestimmten hohen Anstiegsgeschwindigkeit erzeugt wird, ergänzt den Strom I_{Verf} zu einem Strom I_{Fahrzeug}, dessen Verlauf in Fig. 6 mit 69 dargestellt ist. Durch den dynamischen Betrieb mit Batterieunterstützung wird die Dynamik des Fahrzeugs 1 verbessert.

Vom Zeitpunkt t₂ bis zum Zeitpunkt t₃ arbeiten das Brennstoffzellensystem 7 und das dynamische Energiesystem 53 im quasistatischen Betrieb. In dieser Betriebsart wird das Brennstoffzellensystem 7 undynamisch mit Unterstützung des dynamischen Energiesystems 53 betrieben, wodurch sich Kraftstoff einsparen läßt. Der Brennstoffzellenstrom I_{Verf} steigt linear an, was in Fig. 6 mit 70 bezeichnet ist. Der Batteriestrom I_{Batt} nimmt linear bis zum Zeitpunkt t₃ ab. Dieser Verlauf ist in Fig. 6 mit 71 bezeichnet.

Zum Zeitpunkt t₃ ist der statische Betriebspunkt des Brennstoffzellensystems 7 erreicht, d. h. der Brennstoffzellenstrom I_{verf} ist auf seinem für den jeweiligen Lastfall maximalen Wert angekommen. Bei gleichbleibender Anforderung bleibt der Brennstoffzellenstrom konstant.

Es sei angenommen, daß zum Zeitpunkt t₄ der Sollstrom durch eine entsprechende Änderung der Drehmomentanforderung auf null reduziert wird. Das dynamische Energiesystem wird auf Rekuperation umgestellt, d. h. der Stromrichter 3 speist freiwerdende Energie in das Hochvoltnetz zurück. Über den auf Umkehrbetrieb eingestellten DC/DC-Wandler 9 wird die Speicherbatterie 10 geladen. Der Strom I_{Batt} wird, begrenzt auf I_{Battmaxe}, in die Speicherbatterie 10 eingespeist. Der Verlauf I_{Batt} ist in Fig. 6 mit 72 bezeichnet. Der Strom Fahrzeug fällt im sog. Bremsbetrieb des Antriebsmotors gemäß dem in Fig. 6 mit 73 bezeichneten Verlauf ab. Der Strom I_{verf} wird durch die variable Energieflusssteuerung 38 entsprechend dem in Fig. 4 mit 74 bezeichneten Verlauf reduziert, wobei auf einen sehr steilen Abfall ein unwesentliche linearer Abfall bis zum Zeitpunkt t₅ stattfindet, in dem z. B. noch der Strom I_{Aux} erzeugt wird. Nach dem Abklingen des Stroms I_{Fahrzeug} auf null nimmt die Speicherbatterie 10 den noch vom Brennstoffzellensystem 7 abgegebenen Strom, soweit er die Ströme der weiteren Verbraucher übersteigt, auf. Auf die vorstehend angegebene Art ist es möglich, bei einem Lastsprung von einem hohen Lastpunkt zu einem niedrigen Lastpunkt das Drehmoment des Antriebsmotors in kurzer Zeit abzubauen. Die überschüssige Energie wird gespeichert. Das zeitliche Verhalten der Drehmomentreduktion als Antwort auf die Sollwertgeberänderung hängt ab von: der Fahrzeuggeschwindigkeit (bei hohen Geschwindigkeiten erfolgt die Reduzierung langsamer als bei niedrigen) und vom Antriebsstrom (bei hohen Strömen langsamer).

Durch die erfindungsgemäße adaptive Flowswitch-Kompensation werden der Fahrkomfort und die regelungstechnische Stabilität beim Betrieb, insbesondere mit hoher Belastung, z. B. Vollast, verbessert. Bei Brennstoffzellen kann es erforderlich sein, die Richtung der Gase über die Zellen periodisch umzukehren. Zum Umschaltzeitpunkt entsteht kurzzeitig eine elektrische Leistungsverminderung, was bei konstanter Belastung einen Spannungseinbruch zur Folge hat. In einem Fahrzeug mit einer Brennstoffzelle stellt der elektrische Fahrantrieb die Hauptlast dar. Die elektronische Steuerung des Elektro-Antriebs muß bei einem Spannungseinbruch die Stromaufnahme sehr dynamisch erhöhen, um ein konstantes Drehmoment zu halten. Insbesondere bei hohen Lastpunkten wirkt sich der Leistungseinbruch der Brennstoffzelle negativ auf das Gesamtsystem aus:
Das Antriebsmoment kann nicht immer konstant gehalten werden, dies ergibt Einbusen beim Fahrkomfort.
Der Elektro-Antrieb muß seine Stromanforderung sehr dynamisch erhöhen. Dies wirkt sich störend auf den Regelungsprozeß der Stromerzeugung aus.

Die Erfindung ermöglicht es, kurzzeitig Leistungseinbrüche des Stromerzeugungssystems zu kompensieren. Dadurch können Drehmomentschwankungen an elektrischen Antrieben (Fahrantrieb aber auch Hilfsantriebe) vermieden werden und somit der Fahrkomfort erhöht werden. Der Regelungsprozeß des Stromerzeugungssystems wird hierdurch verbessert, da die Stromanforderung durch die Last (Fahrantrieb) nicht erhöht werden muß und somit keine Störgröße auf den Regelungsprozeß einwirkt.

Erfindungsgemäß wird die adaptive Flowswitch-Kompensation durchgeführt, um einen Leistungseinbruch der Brennstoffzelle auszugleichen und damit einen Spannungseinbruch zu verhindern. Es wird ein gesteuerter Energieeintrag aus der Speicherbatterie 10 abhängig vom Laststrom der Brennstoffzelle und einer Flowswitch-Information von der Brennstoffzelle erzeugt. Durch die Beobachtung der resultierenden Spannung auf der Hochvoltseite bei der Flowswitch-Kompensation wird eine Kennlinie angepaßt, nach der sich die Höhe des Stroms bemißt.

Das Brennstoffzellensystem signalisiert via Logiksignal einen bevorstehenden Flowswitch. Zum Zeitpunkt des Flowswitch wird abhängig vom momentanen Brennstoffzellenstrom der DC/DC-Wandler in der Weise gesteuert, daß ein kurzer Stromimpuls zusätzlich eingetragen wird. Die Form ist in einer Steuertabelle abgelegt und auf 1 normiert. Die Höhe des Impulses ist abhängig vom aktuellen Brennstoffzellenstrom und vom adaptiven Lernfaktor. Der adaptive Lernfaktor wird durch Beobachten des Spannungsverlaufs bei Auftreten eines Flowswitch ständig ermittelt und korrigiert systembedingte Streuungen und Schwankungen. Überschreiten die Abweichungen bestimmte Grenzen wird dies als Diagnoseinformation abgespeichert.

Ein weiteres wesentliches Merkmal der Erfindung ist die Unterspannungserkennung und im Zusammenhang damit ein additiver Energieeintrag als Funktion des Brennstoffzellentroms durch entsprechende Regelung des DC/DC-Wandlers 10. Bei einem Stromerzeugungssystem mit einer Brennstoffzelle ist der Verlauf der Spannung in Abhängigkeit vom Laststrom von sehr vielen Faktoren abhängig. Die Abhängigkeiten sind zur Zeit nicht alle mathematisch beschreibbar bzw. vorhersagbar. Mit dem erfindungsgemäßen Unterspannungsregler als Bestandteil des Energiemanagements kann die Zuverlässigkeit und Verfügbarkeit des Systems erhöht werden. Zusätzlich ist es möglich, während des Betriebs auf sich negativ verändernde Systemeigenschaften aktiv zu reagieren. So können die Verfügbarkeit des Systems erhöht und Informationen für Service und Wartung während des Betriebs ermittelt werden. Die Hauptfunktion des erfindungsgemäßen Unterspannungsreglers besteht darin, bei Erreichen eines unteren Grenzwerts der Spannung Energie aus der Batterie 10 zusätzlich einzuspeisen. Dabei wird die Strombilanz nicht berücksichtigt. Der Reglerausgang gibt eine additive Stromanforderung an den DC/DC-Wandler 9 aus und ist abhängig von der Regelabweichung (ΔU) und dem aktuellen Laststrom.

Ein weiterer Bestandteil der Erfindung ist eine Erkennung, wie häufig und bei welchen Situationen, z. B. in Abhängigkeit von der Lastgröße, Temperatur, Luftdruck, Luftfeuchte (Umweltbedingungen) der Regler eingreifen muß. Aus diesen Informationen werden Daten für Service und Wartung abgespeichert. Bei der Überschreitung eines bestimmten Häufigkeitswertes, d. h. der Regler ist pro Zeiteinheit >N mal aktiv, werden aktive Eingriffe in Dynamik und maximale Leistungsbereitstellung vorgenommen mit dem Ziel, die Verfügbarkeit des Systems zu gewährleisten. Die Einschränkung der verfügbaren Leistung wird dem Fahrer in geeigneter Weise angezeigt.

Die Steuerung des Batteriestromanteils erfolgt in der Art und Weise, daß unabhängig von Parameterveränderungen des Gesamtsystems die Strombilanzierung immer korrekt ist. Als Istgrösse ist der DC-Stromwert des Antriebssystems von besonderer Bedeutung. Der erforderliche Stromanteil der Batterie 10 wird aus einer Bilanzierung der Istströme I_{Fahrzeug} und des verfügbaren Stroms von Brennstoffzellensystem I_{Verf} berechnet. Damit nimmt das Regelungskonzept eine ständige Verletzung der Strombilanz bewußt in Kauf.

Obwohl die Istgröße ein zeitliches Delay hat, hat sich dieses Verfahren als wesentlich geeigneter erwiesen, als die Sollwerte für den Batteriestromanteil vorauszuberechnen. Obwohl zur Funktion des beschriebenen Verfahrens zuerst eine Reaktionsgröße (Antriebstrom) vorliegen muß, arbeitet das Verfahren sehr effektiv, da die Reaktionszeit der Stellgröße (Batteriestromanteil gesteuert über DC/DC-Wandler 9) deutlich unter der Speicherzeitkonstante des Brennstoffzellensystems liegt (Kapazitive Energie des Brennstoffzellensystems). Die Strombilanz des Brennstoffzellensystems 7 wird hierdurch in optimaler Weise sichergestellt. Die Vorteile beruhen in einer exakten Energiebilanz, was insbesondere für Reformersysteme sehr wichtig ist. Grundsätzlich erhöht eine exakte Energiebilanz im Brennstoffzellensystem den Wirkungsgrad und die Lebensdauer des Reformers.

Unter Kenntnis, welche Energiemengen mit welcher Dynamik benötigt werden, kann das dynamische Energiesystem 53 gezielt gesteuert werden, bzw. die Stromanforderung an das Brennstoffzellensystem 7 in geeigneter Weise angepaßt werden.

Bei einer ABS-Bremsung kann es vorkommen, daß die angetriebenen Räder "im Schlupf laufen". Es existieren regelungtechnische Verfahren, die in diesem Fall einen Korrektur/Erhöhungsmoment berechnen und an den Antrieb senden. Darauf beschleunigt dieser die Räder meist kurz, um den Schlupf abzubauen. Als Folge können die Räder wieder z. B. Seitenführung aufbauen. In diesem Fall ist nur eine geringe Energiemenge und eine vom einem entsprechend ausgelegten dynamischen Energiesystem abgebbare Leistung zeitlich begrenzt (meist nur bei der Bremseinleitung) erforderlich. Die Dynamik der breitgestellten Leistung muß allerdings sehr hoch sein.

Das erfindungsgemäße Verfahren ist dadurch gekennzeichnet, daß die Fahrzeugsteuereinheit 18 und die Energiesteuereinheit 19 Informationen verarbeiten bzw. zusätzlich Informationen selbst ermitteln: 1.Im oben beschriebenen Fall leitet die Fahrzeugsteuereinheit z. B. ein Bit "ABS-aktiv" an die Energiesteuereinheit 19. Diese leitet aufgrund dieser Information die zeitgleich übermittelte "ansteigende" Sollstromanforderung nicht an das Brennstoffzellensystem 7 weiter, sondern "weiß", daß es sich um eine kurze dynamische, zeitlich begrenzte Anforderung der Fahrzeugsteuereinheit 18 handelt und deckt diesen Bedarf am besten mittels der Batterie 10 ab. Durch diese Methode wird das undynamische Brennstoffzellensystem 7 bei Belastungen dieser Art nicht unnötig in seiner Leistung hoch bzw. nach unten gefahren.

2.Die Fahrzeugsteuereinheit 18 schaltet die Zeitkonstante des Begrenzers des PTn₂ -Glieds auf den kleinstmöglichen Wert, den das dynamische Energiesystem 53 darstellen/folgen kann. Die Folgen sind:
- Wirkungsgradverbesserung des Brennstoffzellensystems 7, Senkung des Verbrauchs.
- Lebensdauerverlängerung des Brennstoffzellensystems.
- Dynamikverbesserung im Vergleich zu fester "zum Brennstoffzellensystem passenden" Zeitkonstante des Speicherglieds PTn₂ .
- Abgasverbesserung.

Weitere Anwendungsfälle bzw. Informationen, die in geeigneter Art und Weise verarbeitet werden, sind:
Economy/Sport-Mode - "Informationsbit": Economy Mode: leistungsschwächere undynamischere Nutzung des dynamischen Energiesystems. Sport-Mode: umgekehrt. (Schalter in der Mittelkonsole) Stop- and Go-Betrieb: Steuerung ermittelt mittels Drehmoment-, Strom-, Drehzahl-, Fahrgeschwindigkeitsdaten und deren Differenzquotienten, ob es sich um einen Stop- and Go- Betrieb (Fahren im Stau) handelt. Die Energiesteuereinheit 19 stellt dann eine "mittlere" undynamische Sollstromanforderung and das Brennstoffzellensystem 7 ein. Die "leistungsschwachen" Beschleunigungs- und Abbremsvorgänge werden durch dynamische Anforderungen des dynamischen Energiesystems 53 abgedeckt. Die Folgen sind:
   - Wirkungsgradverbesserung, Senkung des Verbrauchs,
   - Abgasverbesserung.

## Patentansprüche

1. Verfahren zur Steuerung der Energieversorgung einer wenigstens einen elektrischen Antriebsmotor aufweisenden, mobilen Vorrichtung mit einem hybriden Energieversorgungssystem, das ein Brennstoffzellensystem und ein dynamisches Energiesystem aufweist, wobei die elektrischen Ausgänge des Brennstoffzellensystems mit einer Seite eines Stromrichters verbunden sind, dessen andere Seite den Antriebsmotor speist, der von einer Motorsteuereinheit gesteuert wird, und wobei das dynamische Energiesystem eine Speicherbatterie aufweist, die mit einer Seite eines Gleichstrom-Gleichstrom-Wandlers verbunden ist, dessen andere Seite mit den elektrischen Ausgängen des Brennstoffzellensystems und der einen Seite des Stromrichters verbunden ist,
wobei Signale, die von einem Geber für die Anforderung der Sollleistung des Antriebsmotors erzeugt werden, und Messwerte eines Sensors für die Geschwindigkeit der Vorrichtung zur Bestimmung der vom Brennstoffzellensystem und vom dynamischen Energiesystem aufzubringenden Leistungsanteile an der angeforderten Sollleistung derart, verarbeitet werden,
dass bei einer Sollleistungsänderung an Hand der bereits abgegebenen Leistung des Antriebsmotors und der bereits erzeugten Leistung des Brennstoffzellensystems sowie der Geschwindigkeit der Vorrichtung unter Berücksichtigung der unterschiedlichen Übergangsfunktionen des Brennstoffzellensystems und des dynamischen Energiesystems die Differenz zwischen der vom Brennstoffzellensystem gemäß der Übergangsfunktion verzögert erzeugbaren Teilleistung und der Sollleistung von der Speicherbatterie des dynamischen Energiesystems durch Beaufschlagung des Gleichstrom-Gleichstrom-Wandlers mit entsprechenden Sollwerten erzeugt wird,
**dadurch gekennzeichnet, dass**
zudem ein Signal, das von einem Betriebsartenwahlschalter mit mehreren wählbaren Einstellungen abgegeben wird, die jeweils unterschiedlichen Dynamik-Verhaltensweisen der Vorrichtung zugeordnet sind, und
Messwerte eines Stromsensors für den Ausgangsstrom und eines Spannungssensors für die Ausgangsspannung der Brennstoffzelle
zur Erzeugung der Differenz zwischen der Teilleistung des Brennstoffzellensystems und der Sollleistung der Speicherbatterie unter Berücksichtigung der ausgewählten Dynamik-Verhaltensweise verarbeitet werden.

2. Verfahren nach Anspruch 1,
**dadurch gekennzeichnet, dass**
bei einer sprungförmigen Zu- oder Abnahme der Sollleistung die für die Zu- oder Abnahme der zusätzlichen Leistung erforderliche Zu- oder Abnahme des aus oder in die Speicherbatterie über den Gleichstrom-Gleichstrom-Wandler fließenden Stroms auf einen maximal vorgebbaren Lade- oder einen maximal vorgebbaren Entladestrom begrenzt wird.

3. Verfahren nach Anspruch 1 oder 2,
**dadurch gekennzeichnet, dass**
von einer Fahrzeugsteuereinheit der mobilen Vorrichtung Stromanforderungswerte für den Antriebsmotor Verbraucherstromwerten der weiteren Verbraucher in der Vorrichtung überlagert und mit einem von einem Batteriemanagementsystem bedarfsweise erzeugten Ladestromwert unter Begrenzung auf einen Brennstoffzellenmaximalstromwert einer Energiesteuereinheit zugeführt werden, der weiterhin Vorrichtungsgeschwindigkeitswerte, Drehmomentsollwerte von einem Sollwertgeber, Batterieladezustandswerte und Werte eines Betriebsartenwahlschalters für die Einstellung verschiedener Dynamik Verhaltensweisen der mobilen Vorrichtung zugeführt werden und die in Abhängigkeit von den zugeführten Werten die Werte des Gesamtstrombedarfs und des vom Brennstoffzellensystem unter Berücksichtigung dessen Trägheitsverhaltens und des ausgewählten Dynamik-Verhaltens beizutragenden Strombedarfs berechnet und entsprechende Sollwerte an die Stellglieder des Brennzellensystems ausgibt, und daß jeweils die Werte des von der Brennstoffzelle ausgegebenen Stroms bestimmt, vom Wert des vom Antriebsmotor benötigten Stroms subtrahiert werden und unter Begrenzung auf einen maximal angebbaren Entlade- oder Ladestrom der Speicherbatterie als Stromsollwerte dem Gleichstrom-Gleichstrom-Wandler zugeführt werden.

4. Verfahren nach Anspruch 1 oder 2,
**dadurch gekennzeichnet,**
**daß** die Summe des jeweils vom Antriebsmotor über den Stromrichter bezogenen Werts des Stroms und der von den weiteren Verbrauchern der Vorrichtung bezogenen Werte der Ströme vom Wert des von der Brennstoffzelle ausgegebenen Stroms subtrahiert wird und bei Erreichen eines maximal vorgebbaren Werts des Entladstroms der Speicherbatterie auf diesen Entladestrom begrenzt wird und dass das Ergebnis der Differenz der von den weiteren Verbrauchern bezogenen Ströme vom Wert des verfügbaren Brennstoffzellenstroms aufgeschaltet wird und der Steuereinheit der Vorrichtung als verfügbarer Wert des Stroms gemeldet wird.

5. Verfahren nach zumindest einem der vorhergehenden An-Ansprüche,
**dadurch gekennzeichnet, dass**
mit einem Speicherglied n-ter Ordnung die Übergangsfunktion des Brennstoffzellensystems als Regelstrecke nachgebildet wird, dass das Speicherglied und eine Steuereinheit für das dynamische Energiesystem mit den von der Fahrzeugsteuereinheit der mobilen Vorrichtung ausgegebenen Drehmomentsollwerten beaufschlagt werden, daß der Steuereinheit zusätzlich die gemäß der Übergangfunktion der Regelstrecke erzeugten Werte zugeführt werden und daß durch die Steuereinheit der vom dynamischen Energiesystem aufzubringende Strom über ein Begrenzungsglied, das in Abhängigkeit von Steuersignalen aus der Vorrichtung auf wenigstens zwei Rampen mit unterschiedlicher Steigung einstellbar ist, als Stromsollwert dem Gleichstrom-Gleichstrom-Wandler zuführbar ist.

6. Verfahren nach zumindest einem der vorhergehenden An-Ansprüche,
**dadurch gekennzeichnet, dass**
während der Dauer eines Beschleunigungsvorgangs der Vorrichtung bei dem von der Fahrzeugsteuereinheit durch Vorsteuerung ein Solldrehmoment und aus einem Kennfeld mit dem Drehmoment als Funktion des maximalen Stroms und der Drehzahl ein Maximalstrom für die Erzeugung des Solldrehmoments bestimmt wird, die Differenz zwischen dem vom Brennstoffzellensystem während des Bescheunigungsvorgangs erzeugten Strom und dem für die Erzielung der hohen Beschleunigung gemäß dem Kennfeld benötigten Gesamtstrom durch das dynamische Energiesystem erzeugt wird.

7. Verfahren nach zumindest einem der vorhergehenden Ansprüche,
**dadurch gekennzeichnet, dass**
bei einer Verminderung des vom Antriebsmotor abzugebenden Solldrehmoments aus dem Kennfeld der für das geringere Drehmoment erforderliche Strom bestimmt wird und daß an Hand des jeweiligen Belastungszustands des Brennstoffzellensystems bei der Vorgabe des Drehmomentsollwerts und der vorhandenen Speicherfähigkeit der Speicherbatterie diese nach Umkehr des Stromflusses im Stromrichter im Bremsbetrieb des Antriebsmotors mit dem maximal vorgebbaren Ladestrom über den Gleichstrom-Gleichstrom-Wandler geladen und das Brennstoffzellensystem auf den für das geringere Solldrehmoment erforderlichen Strom eingestellt wird.

8. Verfahren nach zumindest einem der vorhergehenden Ansprüche,
**dadurch gekennzeichnet, dass**
die Richtung der Brenngas- und Luftzufuhr zur Brennstoffzelle periodisch umgekehrt wird, und daß während der Umkehr der Gaszufuhr ein auf die momentane Stromausgabe des Brennstoffzellensystems und/oder des dynamischen Energiesystems unmittelbar vor der Umschaltung abgestimmter Stromimpuls vom dynamischen Energiesystem über den Gleichstrom-Gleichstrom-Wandler in den Stromrichter eingespeist wird.

9. Verfahren nach zumindest einem der vorhergehenden Ansprüche,
**dadurch gekennzeichnet, dass**
die Ausgangsspannung des Brennstoffzellensystems auf Erreichen oder Unterschreiten eines für den einwandfreien Betrieb zulässigen Spannungsgrenzwerts überwacht wird und daß bei Erreichen oder Unterschreiten des Spannungsgrenzwerts die Spannung in dem am Ausgang der Brennstoffzelle angeschlossenen Netz durch Stromeinspeisung über den Gleichstrom-Gleichstrom-Wandler auf wenigstens dem zulässigen Grenzwert geregelt wird.

10. Verfahren nach zumindest einem der vorhergehenden Ansprüche,
**dadurch gekennzeichnet, dass**
die Belastungssituation des Energieversorgungssystems beim Eingreifen der Regelung und die Häufigkeit des Eingreifens der Spannungsregelung während des Betriebs des Energieversorgungssystems registriert werden und daß nach Überschreiten einer vorgebbaren Anzahl von Eingriffen die Dynamik durch Reduzierung der Anstiegsgeschwindigkeit des Stroms des Brennstoffzellensystems und/oder des dynamischen Energiesystems und die Größe der abgegebenen Leistung reduziert werden.

11. Verfahren nach zumindest einem der vorhergehenden Ansprüche, **dadurch gekennzeichnet, daß** die Anstiegsgeschwindigkeit der Ausgangsleistung des Brennstoffzellensystems bei ausreichender Speicherbatterieladung bei Erhöhung des Drehmomentsollwerts begrenzt wird und daß der für die Erzeugung des Drehmomentsollwerts notwendige Strom während des Anstiegs durch das dynamische Energiesystem erzeugt wird.

12. Verfahren nach zumindest einem der vorhergehenden Ansprüche,
**dadurch gekennzeichnet, dass**
mittels des Betriebsartenwahlschalters wenigstens drei Betriebsarten für den Antriebsmotor einstellbar sind, von denen eine auf eine große Dynamik der Vorrichtung, eine zweite auf eine geringere Dynamik der Vorrichtung und eine vierte auf Stop- und Go-Betrieb gerichtet sind und daß im Stop- und Go-Betrieb bei-Beschleunigungen Ströme vom dynamischen Energiesystem erzeugt und beim Abbremsen darin gespeichert werden.

13. Verfahren nach zumindest einem der vorhergehenden Ansprüche,
**dadurch gekennzeichnet, dass**
der vom dynamischen Energiesystem aufzubringende Anteil des Stroms an dem für die Erzeugung einer angeforderten Antriebsleistung notwendigen Strom mit dem jeweils vorhanden Istwert des von der Vorrichtung verbrauchten Stroms und dem vom Brennstoffzellensystem verfügbaren Strom bestimmt wird.

14. Verfahren nach zumindest einem der vorhergehenden Ansprüche,
**dadurch gekennzeichnet, dass**
ein Notlauf des Energieversorgungssystems durch Spannungsregelung im Netz am Eingang des Stromrichters mittels des Gleichstrom-Gleichstrom-Wandlers und Einspeisung des Stroms aus der Speicherbatterie gewährleistet wird.

15. Anordnung zur Steuerung der Energieversorgung einer wenigstens einen elektrischen Antriebsmotor aufweisenden Vorrichtung mit einem hybriden Energieversorgungssystem, das ein Brennstoffzellensystem und ein dynamisches Energiesystem enthält, wobei die elektrischen Ausgänge des Brennstoffzellensystems mit einer Seite eines Stromrichters verbunden sind, dessen andere Seite den Antriebsmotor speist, der von einer Motorsteuereinheit gesteuert wird, und wobei das dynamische Energiesystem eine Speicherbatterie aufweist, die mit einer Seite eines Gleichstrom-Gleichstrom-Wandlers verbunden ist, dessen andere Seite mit den elektrischen Ausgängen des Brennstoffzellensystems und der einen Seite des Stromrichters verbunden ist,
wobei eine mit einem Geschwindigkeitssensor der mobilen Vorrichtung (1) und einem Geber (31) für ein vom Antriebsmotor zu erzeugendes Solldrehmoment verbundene Fahrzeugsteuereihheit (18) für die Einstellung des Solldrehmoments einer Motorsteuereinheit (4) und für die Bestimmung der in einem Kennfeld zu Drehmomentsollwerten und Drehzahlwerten gespeicherten Stromsollwerte für die mobile Vorrichtung (1) vorgesehen ist,
daß die Fahrzeugsteuereinheit (18) mit einer Energiesteuereinheit (19) verbunden ist, die mit dem Brennstoffzellensystem (7), einem Batteriemanagementsystem (12) für die Speicherbatterie (10) und mit dem Gleichstrom-Gleichstrom-Wandler (9) verbunden ist,
daß der von der Brennstoffzelle des Brennstoffzellensystems (7) abgegebene Strom gemessen und als Brennstoffzellenstromwert der Energiesteuereinheit (19) zugeführt wird,
daß der Strom des Antriebsmotors vor dem Stromrichter (3) gemessen und als Fahrstromwert der Energiesteuereinheit (19) zugeführt wird,
daß die Ströme der weiteren Verbraucher gemessen oder berechnet und der Energiesteuereinheit (19) als Summenstromwert zugeführt werden,
daß vom Batteriemanagementsystem (12) Werte über den Ladezustand der Speicherbatterie (10) und Werte über den maximal vorgebbaren Lade- und Entladestrom einer Energieflußsteuerung (38) zugeführt werden,
und daß der Stromsollwert, der Brennstoffzellenstromwert, der Fahrstromwert, der Summenstromwert, der Ladezustandswert und die maximal vorgegebenen Werte des Lade- und Entladestroms in der Energiesteuereinheit (19) und in der dazugehörigen Energieflußsteuerung (38) mit einem oder mehreren Programmen derart verarbeitet werden,
dass bei einer Sollleistungsänderung an Hand der bereits abgegebenen Leistung des Antriebsmotors und der bereits erzeugten Leistung des Brennstoffzellensystems sowie der Geschwindigkeit der Vorrichtung unter Berücksichtigung der unterschiedlichen Übergangsfunktionen des Brennstoffzellensystems und des dynamischen Energiesystems die Differenz zwischen der vom Brennstoffzellensystem gemäß der Übergangsfunktion verzögert erzeugbaren Teilleistung und der Sollleistung von der Speicherbatterie des dynamischen Energiesystems durch Beaufschlagung des Gleichstrom-Gleichstrom-Wandlers mit entsprechenden Sollwerten erzeugt wird,
**dadurch gekennzeichnet, dass** ein Betriebsartenwahlschalter (50, 51, 52) für die Einstellung verschiedener Betriebsarten des Energieversorgungssystems mit der Energiesteuereinheit (19) verbunden ist,
und daß zudem die eingestellte Betriebsart zur Erzeugung der Differenz zwischen der Teilleistung des Brennstoffzellensystems und der Sollleistung der Speicherbatterie unter Berücksichtigung der ausgewählten Dynamik-Verhaltensweise verarbeitet wird.

16. Anordnung nach Anspruch 15,
**dadurch gekennzeichnet, dass**
die mobile Vorrichtung ein Kraftfahrzeug zum Personen- und/oder Gütertransport ist.

17. Anordnung nach Anspruch 15,
**dadurch gekennzeichnet, dass**
die Vorrichtung (1) ein Gabelstapler ist.

## Claims

1. Method for controlling the power supply of a mobile device having at least one electric drive motor and a hybrid power supply system which has a fuel cell system and a dynamic power system, wherein the electrical outputs of the fuel cell system are connected to one side of a power converter whose other side feeds the drive motor which is controlled by a motor control unit, and wherein the dynamic power system has a storage battery which is connected to one side of a d.c./d.c transformer whose other side is connected to the electrical outputs of the fuel cell system and to one side of the power converter, wherein signals which are generated by a signal transmitter for requesting the setpoint power of the drive motor, and measured values of a sensor for the velocity of the device are processed in order to determine the power components in the requested setpoint power which are to be provided by the fuel cell system and by the dynamic power system, in such a way that when there is a change in the setpoint power the difference between the partial power which can be generated by the fuel cell system with a delay according to the transition function and the setpoint power of the storage battery of the dynamic power system is generated by applying corresponding setpoint values to the d.c./d.c. transformer, with reference to the power of the drive motor which has already been output and the power of the fuel cell system which has already been generated as well as the velocity of the device, taking into account the different transition functions of the fuel cell system and of the dynamic power system, **characterized in that**, furthermore a signal which is output by an operating mode switch with a plurality of selectable settings which are each assigned to different types of dynamic behavior of the device, and measured values of a power sensor for the output current and emitted values of a voltage sensor for the output voltage of the fuel cell are processed in order to generate of the difference between the partial power of the fuel cell system and the setpoint power of the storage battery by taking into account the selected type of dynamic behaviour.

2. Method according to Claim 1, **characterized in that**, in the case of a sudden increase or decrease in the setpoint power, the increase or decrease in the current flowing out of or into the storage battery via the d.c./d.c. converter - said increase or decrease being necessary for the increase or decrease in the additional power - is limited to a maximum prescribable charge current or a maximum prescribable discharge current.

3. Method according to Claim 1 or 2, **characterized in that** from a vehicle control unit of the mobile device load current values of the further loads in the device are superimposed on the power demand values for the drive motor and fed, with a charge current value generated when necessary by a battery management system, to a power control unit with limitation to a fuel cell maximum power value of a power control unit, to which power control unit device for velocity values, torque setpoint values from a setpoint value signal transmitter, battery charge state values and values of an operating mode selector switch for setting various types of dynamic behavior are fed to the mobile device, and which calculates, as a function of the fed values, the values of the overall power demand and of the power demand which is to be contributed by the fuel cell system taking into account its inertia behavior and the selected dynamic behavior, and outputs corresponding setpoint values to the actuating elements of the fuel cell system, and **in that** in each case the values of the current which is output by the fuel cell is determined, subtracted from the value of the current required by the drive motor, and are fed as current setpoint values to the d.c./d.c. transformer with limitation to a maximum specifiable discharge current or charge current of the storage battery.

4. Method according to Claim 1 or 2, **characterized in that** the sum of the value of the current which is respectively drawn from the drive motor via the power converter and values of the currents which are drawn from the other loads of the device are subtracted from the value of the current which is output by the fuel cell, and when a maximum predefinable value of the discharge current of the storage battery is reached it is limited to its discharge current, and **in that** the result of the difference between the currents which are drawn from the further loads is added to the value of the available fuel cell current and signaled to the control unit of the device as an available value of the current.

5. Method according to at least one of the preceding claims, **characterized in that** the transition function of the fuel cell system is simulated as a controlled system using a memory element of the n-th order, **in that** the torque setpoint values which are output by the vehicle control unit of the mobile device are applied to the memory element and to a control unit for the dynamic power system, **in that** the values which are generated according to the transition function of the controlled system are additionally fed to the control unit, and **in that** the current which is to be applied by the dynamic power system can be fed as a current setpoint value to the d.c./d.c. transformer by the control unit by means of a limiter element which can be set to at least two ramps with different gradients as a function of control signals from the device.

6. Method according to at least one of the preceding claims, **characterized in that**, during the duration of an acceleration process of the device, during which the setpoint torque is determined by the vehicle control unit by pilot control and a maximum current for the generation of the setpoint torque is determined from a characteristic diagram with the torque as a function of the maximum current and the rotational speed, the difference between the current which is generated by the fuel cell system during the acceleration process and the overall current which is required by the dynamic power system according to the characteristic diagram in order to achieve the high acceleration is generated.

7. Method according to at least one of the preceding claims, **characterized in that** when there is a reduction in the setpoint torque to be output by the drive motor the current which is necessary for the lower torque is determined from the characteristic diagram, and **in that** with reference to the respective load state of the fuel cell system given the preset torque setpoint value and the existing storage capacity of the storage battery, the latter is charged with the maximum prescribable charge current by means of the d.c./d.c. transformer after the reversal of the flow of current in the power converter in the braking mode of the drive motor and the fuel cell system is set to the current which is necessary for the lower setpoint torque.

8. Method according to at least one of the preceding claims, **characterized in that** the direction of the supply of combustion gas and air to the fuel cell is reversed periodically, and **in that** during the reversal of the supply of gas a current pulse which is matched to the instantaneous output of current of the fuel cell system and/or of the dynamic power system directly before the changeover is fed in to the power converter by the dynamic power system via the d.c./d.c. transformer.

9. Method according to at least one of the preceding claims, **characterized in that** the output voltage of the fuel cell system is monitored to determine when a voltage limiting value which is permissible for satisfactory operation is reached or undershot, and **in that** when the voltage limiting value is reached or undershot, the voltage in the power system which is connected to the output of the fuel cell is regulated to at least the permissible limiting value by feeding in current via the d.c./d.c. transformer.

10. Method according to at least one of the preceding claims, **characterized in that** the load situation of the power supply system during the intervention of the regulating process and the frequency of intervention of the voltage regulating process during the operation of the power supply system are registered, and **in that** after a predefinable number of interventions have been exceeded the dynamics are reduced by reducing the rate of increase in the current of the fuel cell system and/or the dynamic power system and the magnitude of the power which is output.

11. Method according to at least one of the preceding claims, **characterized in that** the rate of increase in the output power of the fuel cell system given sufficient storage battery charge when the torque setpoint value is increased is limited, and **in that** the current which is necessary to generate the torque setpoint value is generated by the dynamic power system during the increase.

12. Method according to at least one of the preceding claims, **characterized in that** at least three operating modes for the drive motor can be set by means of the operating mode selector switch, one operating mode of which is aimed at a high level of dynamics of the device, a second of which is aimed at a low level of dynamics of the device and a third of which is aimed at a stop and go operating mode, and **in that** when accelerations occur in the stop and go operating mode currents are generated by the dynamic power system and stored therein during braking.

13. Method according to at least one of the preceding claims, **characterized in that** the portion of the current to be applied by the dynamic power system which is formed by the current necessary to generate a requested drive power with the respectively existing actual value of the current consumed by the device and the current available from the fuel cell system is determined.

14. Method according to at least one of the preceding claims, **characterized in that** an emergency operating mode of the power supply system is ensured by a voltage regulating process in the power system at the input of the power converter by means of the d.c./d.c. transformer and feeding of the current from the storage battery.

15. Arrangement for controlling the power supply of a device having at least one electric drive motor and a hybrid power supply system which has a fuel cell system and a dynamic power system, wherein the electrical outputs of the fuel cell system are connected to one side of a power converter whose other side feeds the drive motor which is controlled by a motor control unit, and wherein the dynamic power system has a storage battery which is connected to one side of a d.c./d.c converter whose other side is connected to the electrical outputs of the fuel cell system and to one side of the power converter, wherein a vehicle control unit (18) which is connected to a velocity sensor of the mobile device (1) and to a signal transmitter (31) for a setpoint torque to be generated by the drive motor is provided for setting the setpoint torque of an motor control unit (4) and for determining the current setpoint values for the mobile device (1) which are stored in a characteristic diagram for torque setpoint values and rotational speed values,
wherein the vehicle control unit (18) is connected to a power control unit (19) which is connected to the fuel cell system (7), a battery management system (12) for the storage battery (10) and to the d.c./d.c. transformer (9),
wherein the current which is output by the fuel cell of the fuel cell system (7) is measured and is fed as a fuel cell current value to the power control unit (19),
in that the current of the drive motor is measured upstream of the power converter (3) and is fed as a driving current value to the power control unit (19),
wherein the current of the other loads are measured or calculated and fed to the power control unit (19) as a composite current value,
wherein values from the battery management system (12) relating to the charge state of the storage battery (10) and values relating to the maximum prescribable charge current and discharge current are fed to a power flux controller (38),
and wherein the power setpoint value, the fuel cell current value, the driving current value, the composite current value, the charge state value and the maximum prescribed values of the charge current and discharge current are processed in the power control unit (19) and in the associated power flux controller (38) with one or more programs in such a way that when there is a change in the setpoint power the difference between the partial power which can be generated by the fuel cell system with a delay according to the transition function and the setpoint power is generated by the storage battery of the dynamic power system by applying corresponding setpoint values to the d.c./d.c. transformer, with reference to the power of the drive motor which has already been output and the power of the fuel cell system which has already been generated as well as the velocity of the device, taking into account the different transition functions of the fuel cell system and of the dynamic power system,
**characterized in that** an operating mode selector switch (50, 51, 52) for setting various operating modes of the power supply system is connected to the power control unit (19), and **in that** furthermore the operating mode which is set is processed in order to generate the difference between the partial power of the fuel cell system and the setpoint power of the storage battery, taking into account the selected type of dynamic behaviour.

16. Arrangement according to Claim 15, **characterized in that** the mobile device is a motor vehicle for transporting persons and/or goods.

17. Arrangement according to Claim 15, **characterized in that** the device (1) is a forklift truck.

## Revendications

1. Procédé de commande de l'alimentation en énergie d'un dispositif mobile qui présente au moins un moteur électrique d'entraînement et un système hybride d'alimentation en énergie qui présente un système de cellule à combustible et un système dynamique d'énergie,
dans lequel les sorties électriques du système de cellule à combustible sont reliées à un côté d'un redresseur de courant dont l'autre côté alimente le moteur d'entraînement qui est commandé par une unité de commande de moteur,
dans lequel le système dynamique d'énergie présente une batterie d'accumulation qui est reliée à un côté d'un convertisseur courant continu-courant continu dont l'autre côté est relié aux sorties électriques du système de cellule à combustible et à un côté du redresseur de courant,
dans lequel des signaux qui sont formés par une sonde définissent la puissance de consigne, et des valeurs de mesure d'un détecteur de vitesse du dispositif, qui déterminent les proportions de la puissance demandée qui doivent être apportées par le système de cellule à combustible et par le système dynamique d'énergie sont traitées de telle sorte que
en cas de modification de la puissance de sortie, à l'aide de la puissance déjà délivrée par le moteur d'entraînement et de la puissance déjà délivrée par le système de cellule à combustible ainsi que de la vitesse du dispositif et en tenant compte des différentes fonctions de transfert du système de cellule à combustible et du système d'énergie dynamique, on forme la différence entre la partie de la puissance qui peut être produite par le système de cellule à combustible en tenant compte du retard provoqué par la fonction de transfert et la puissance de consigne délivrée par la batterie d'accumulation du système dynamique d'énergie en appliquant des valeurs de consigne appropriées sur le convertisseur courant continu-courant continu,
**caractérisé en ce que**
on traite de plus un signal délivré par un commutateur de sélection de mode de fonctionnement qui présente plusieurs positions réglables à chacune desquelles sont associés des comportements dynamiques différents du dispositif et
**en ce que** les valeurs de mesure d'un détecteur de courant prévu pour le courant de sortie et d'un détecteur de tension prévu pour la tension de sortie de la cellule à combustible sont traitées pour former la différence entre la partie de la puissance délivrée par le système de cellule à combustible et la puissance de consigne délivrée par la batterie d'accumulation en tenant compte du comportement dynamique sélectionné.

2. Procédé selon la revendication 1, **caractérisé en ce qu'**en cas d'augmentation ou de diminution brusques de la puissance de consigne, l'augmentation ou la diminution du courant qui s'écoule à travers le convertisseur courant continu-courant continu depuis la batterie d'accumulation ou dans la batterie d'accumulation, qui sont nécessaires pour assurer l'augmentation ou la diminution de la puissance supplémentaire, sont limitées à un courant maximum de charge prédéterminé ou à un courant maximum de décharge prédéterminé.

3. Procédé selon les revendications 1 ou 2, **caractérisé en ce qu'**une unité de commande du véhicule du dispositif mobile superpose les valeurs du courant demandé par le moteur d'entraînement aux valeurs de courant consommé par les autres consommateurs du dispositif et les amène à une unité de commande d'énergie avec la valeur de courant de charge formée si nécessaire par un système de gestion de batterie et sous la limite de la valeur maximale du courant délivré par la cellule à combustible,
**en ce que** la valeur de la vitesse du dispositif, la valeur de consigne du couple de rotation provenant d'un émetteur de valeurs de consigne, la valeur de l'état de charge de la batterie et la valeur d'un commutateur de sélection du mode de fonctionnement qui assure le réglage des différents comportements dynamiques du dispositif mobile sont en outre apportées à l'unité de commande d'énergie qui, en fonction des valeurs amenées, calcule les valeurs du courant total nécessaire et du courant qui doit être délivré par le système de cellule à combustible en tentant compte de son comportement inertiel et du comportement dynamique sélectionné et délivre des valeurs de consigne correspondantes aux organes de réglage du système de cellule à combustible et
**en ce que** les valeurs de courant délivré par la cellule à combustible sont déterminées, sont soustraites de la valeur du courant nécessaire au moteur d'entraînement et, sous la limite du courant maximum de décharge ou de charge admissible pour la batterie d'accumulation, sont amenées comme valeurs de courant de consigne au convertisseur courant continu-courant continu.

4. Procédé selon les revendications 1 ou 2, **caractérisé en ce que** la somme de chaque valeur de courant apportée au moteur d'entraînement par le redresseur de courant et des valeurs des courants consommés par les autres consommateurs du dispositif est soustraite de la valeur du courant délivré par la cellule à combustible, **en ce que** lorsqu'une valeur maximale prédéterminée du courant de décharge de la batterie d'accumulation est atteinte, cette somme est limitée à ce courant de décharge et **en ce que** le résultat de la différence entre les courants consommés par les autres consommateurs et la valeur du courant que peut délivrer la cellule à combustible est déterminé et est transmis à l'unité de commande du dispositif comme valeur du courant disponible.

5. Procédé selon au moins l'une des revendications précédentes, **caractérisé en ce que** la fonction de transfert du système de cellule à combustible est reproduite sous la forme de boucles de régulation par un organe d'accumulation d'ordre n, **en ce que** les valeurs de consigne de couple de rotation délivrées par l'unité de commande de véhicule du dispositif mobile sont appliquées sur l'organe d'accumulation et sur une unité de commande du système dynamique d'énergie, **en ce que** les valeurs formées en conformité avec la fonction de transfert de la boucle de régulation sont de plus amenées à l'unité de commande et **en ce que** le courant qui doit être délivré par le système dynamique d'énergie est amené par l'unité de commande comme valeur de consigne de courant au convertisseur courant continu-courant continu par l'intermédiaire d'un organe de limitation qui peut être réglé sur au moins deux pentes d'inclinaison différentes en fonction de signaux de commande provenant du dispositif.

6. Procédé selon au moins l'une des revendications précédentes, **caractérisé en ce que** pendant la durée d'une opération d'accélération du dispositif au cours de laquelle l'unité de commande du véhicule détermine un courant maximal de formation du couple de rotation de consigne par pré-commande d'un couple de rotation de consigne et à partir d'un champ de caractéristiques qui donne le couple de rotation en fonction du courant maximum et du régime de rotation, la différence entre le courant produit par le système de cellule à combustible pendant l'opération d'accélération et le courant total nécessaire selon le champ de caractéristiques pour obtenir l'accélération élevée est délivrée par le système dynamique d'énergie.

7. Procédé selon au moins l'une des revendications précédentes, **caractérisé en ce qu'**au cas où le couple de rotation de consigne que le moteur d'entraînement doit délivrer diminue, le courant nécessaire pour délivré le couple de rotation moins élevé est déterminé à l'aide du champ de caractéristiques et **en ce qu'**à partir de l'état de charge du système de cellule à combustible au moment où la valeur de consigne du couple de rotation est définie et pour la capacité d'accumulation disponible à cet instant dans la batterie d'accumulation, cette dernière est chargée par l'intermédiaire du convertisseur courant continu-courant continu au courant de charge maximum prédéterminé après que l'écoulement du courant dans le redresseur de courant a été inversé en faisant fonctionner le moteur d'entraînement en freinage, et le système de cellule à combustible est réglé au courant nécessaire pour ce couple de rotation de consigne moins élevé.

8. Procédé selon au moins l'une des revendications précédentes, **caractérisé en ce que** la direction de l'amenée de gaz combustible et d'air à la cellule à combustible est inversée périodiquement et **en ce que** pendant l'inversion de l'amenée de gaz, une impulsion de courant accordée au courant délivré à ce moment par le système de cellule à combustible et/ou par le système dynamique d'énergie immédiatement avant l'inversion est injectée dans le redresseur de courant par le système dynamique d'énergie par l'intermédiaire du convertisseur courant continu-courant continu.

9. Procédé selon au moins l'une des revendications précédentes, **caractérisé en ce que** l'on surveille si la tension de sortie du système de cellule à combustible atteint ou dépasse une valeur limite de courant admissible pour un fonctionnement correct et **en ce que** lorsque la valeur limite de tension est atteinte ou dépassée, la tension dans le réseau raccordé à la sortie de la cellule à combustible est régulée à au moins la valeur limite admissible en faisant injecter du courant par le convertisseur courant continu-courant continu.

10. Procédé selon au moins l'une des revendications précédentes, **caractérisé en ce que** l'état de charge du système d'alimentation en énergie est enregistré lorsque la régulation agit et la fréquence d'action de la régulation de tension pendant le fonctionnement du système d'alimentation en énergie est enregistrée, et **en ce qu'**après qu'un nombre prédéterminé d'actions est dépassé, la dynamique et le niveau de la puissance délivrée sont réduits par réduction de la vitesse de montée du courant du système de cellule à combustible et/ou du système dynamique d'énergie.

11. Procédé selon au moins l'une des revendications précédentes, **caractérisé en ce que** lorsque la valeur de consigne du couple de rotation augmente, la vitesse de montée de la puissance de sortie du système de cellule à combustible est limitée si la charge de la batterie d'accumulation est suffisante et le courant nécessaire pour produire la valeur de consigne du couple de rotation est délivré par le système dynamique d'énergie pendant la montée.

12. Procédé selon au moins l'une des revendications précédentes, **caractérisé en ce que** le commutateur de sélection de mode de fonctionnement permet d'établir au moins trois modes de fonctionnement du moteur d'entraînement parmi lesquels l'un vise une dynamique élevée du dispositif, un deuxième une dynamique moindre du dispositif et un quatrième un fonctionnement arrêt-démarrage, et **en ce qu'**en fonctionnement arrêt-démarrage, le courant est délivré par le système dynamique d'énergie pendant l'accélération et y est accumulé pendant le freinage.

13. Procédé selon au moins l'une des revendications précédentes, **caractérisé en ce que** la proportion du courant que doit délivrer le système dynamique d'énergie pour obtenir le courant nécessaire pour délivrer une puissance d'entraînement demandée est déterminée à partir de la valeur effective à ce moment du courant consommé par le dispositif et du courant que peut délivrer le système de cellule à combustible.

14. Procédé selon au moins l'une des revendications précédentes, **caractérisé en ce que** le fonctionnement de secours du système d'alimentation en énergie est garanti par régulation de la tension dans le réseau à l'entrée du redresseur de courant au moyen du convertisseur courant continu-courant continu et par injection de courant en provenance de la batterie d'accumulation.

15. Ensemble de commande de l'alimentation en énergie d'un dispositif qui présente au moins un moteur d'entraînement électrique et un système hybride d'alimentation en énergie qui contient un système de cellule à combustible et un système dynamique d'énergie,
dans lequel les sorties électriques du système de cellule à combustible sont reliées à un côté d'un redresseur de courant dont l'autre côté alimente le moteur d'entraînement qui est commandé par une unité de commande de moteur,
dans lequel le système dynamique d'énergie présente une batterie d'accumulation qui est reliée à un côté d'un convertisseur courant continu-courant continu dont l'autre côté est relié aux sorties électriques du système de cellule à combustible et à un côté du redresseur de courant,
dans lequel une unité (18) de commande du véhicule reliée à un détecteur de vitesse du dispositif mobile (1) et à un émetteur (31) qui détermine le couple de rotation de consigne que le moteur d'entraînement doit délivrer est prévue pour établir le couple de rotation de consigne d'une unité (4) de commande de moteur et pour déterminer pour le dispositif mobile (1) les valeurs de consigne de courant conservées dans un champ de caractéristiques qui reprend les valeurs de couple de rotation de consigne et les valeurs de régime de rotation,
l'unité (18) de commande du véhicule étant reliée à une unité (19) de commande d'énergie qui est reliée au système (7) de cellule à combustible, à un système (12) de gestion de la batterie d'accumulation (10) et au convertisseur courant continu-courant continu (9),
le courant délivré par la cellule à combustible du système (7) de cellule à combustible étant mesuré et amené à l'unité (19) de commande d'énergie en tant que valeur de courant de la cellule à combustible, le courant du moteur d'entraînement étant mesuré en amont du redresseur de courant (3) et amené à l'unité (19) de commande d'énergie en tant que valeur de courant de roulage,
les courants des autres consommateurs étant mesurés ou calculés et étant amenés à l'unité (19) de commande d'énergie sous la forme d'une valeur de somme de courants,
le système (12) de gestion de batterie envoyant à une commande (38) de flux d'énergie des valeurs concernant l'état de charge de la batterie d'accumulation (10) et de valeurs concernant les courants maximaux prédéterminés de charge et de décharge,
la valeur de courant de consigne, la valeur de courant de la cellule à combustible, la valeur de courant de roulage, la valeur de somme de courants, la valeur d'état de charge et les valeurs maximales prédéterminées du courant de charge et du courant de décharge étant traitées à l'aide d'un ou de plusieurs programmes dans l'unité (19) de commande d'énergie et dans la commande (38) de flux d'énergie qui en fait partie, de telle sorte que
en cas de modification de la puissance de sortie, à l'aide de la puissance déjà délivrée par le moteur d'entraînement et de la puissance déjà délivrée par le système de cellule à combustible ainsi que de la vitesse du dispositif et en tenant compte des différentes fonctions de transfert du système de cellule à combustible et du système d'énergie dynamique, on forme la différence entre la partie de la puissance qui peut être produite par le système de cellule à combustible en tenant compte du retard provoqué par la fonction de transfert et la puissance de consigne délivrée par la batterie d'accumulation du système dynamique d'énergie en appliquant des valeurs de consigne appropriées sur le convertisseur courant continu-courant continu, **caractérisé en ce que**
un commutateur (50, 51, 52) de sélection de mode de fonctionnement qui assure l'établissement des différents modes de fonctionnement du système d'alimentation en énergie est relié à l'unité (19) de commande d'énergie et
**en ce que** le mode de fonctionnement établi est de plus traité pour former la différence entre la partie de la puissance apportée par le système de cellule à combustible et la puissance de consigne de la batterie d'accumulation en tenant compte du comportement dynamique sélectionné.

16. Ensemble selon la revendication 15, **caractérisé en ce que** le dispositif mobile est un véhicule automobile destiné à transporter des personnes et/ou des marchandises.

17. Ensemble selon la revendication 15, **caractérisé en ce que** le dispositif (1) est un élévateur à fourche.
